# EUROPEAN PATENT APPLICATION

(11) **EP 4 845 108 A1**
(43) Date of publication of application: **25.11.2026**
(21) Application number: 24918755.0
(22) Date of filing: 19.01.2024
(51) Int. Cl.: H04L 27/26

(54) **TERMINAL AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); NAGATA, Satoshi, Tokyo 100-6150 (JP); LIU, Juan, Beijing, 100190 (CN); LIU, Wenjia, Beijing, 100190 (CN); HOU, Xiaolin, Beijing, 100190 (CN); WANG, Jing, Beijing, 100190 (CN); PI, Qiping, Beijing, 100190 (CN); CHEN, Lan, Beijing, 100190 (CN)
(74) Representative: Hoffmann Eitle
(86) International application number: PCT/JP2024/001536
(87) International publication number: WO 2025/154288

(57) **Abstract**

A terminal includes: a control unit configured to generate a DFT-s-OFDM (Discrete Fourier transform - spread - Orthogonal Frequency Division Multiplexing) signal by performing asymmetric transform precoding between layer mapping and antenna port mapping; and a transmission unit configured to transmit the DFT-s-OFDM signal. The control unit calculates a transport block size based on a parameter related to the asymmetric transform precoding.

## Description

### TECHNICAL FIELD

The present invention relates to a terminal and a communication method in a wireless communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more (e.g., Non-Patent Literature 1 and Non-Patent Literature 2).

In addition, various requirements for the next generation "6G" are being discussed. For example, the requirements include ultra broadband communication, mission critical communication, ultra massive connection, universal coverage, intelligent connection, ubiquitous sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

### CITATION LIST

### Non-Patent Literature

Non-Patent Literature 1: 3GPP TS 38.300 V17.6.0 (2023-09)
Non-Patent Literature 2: 3GPP TS 38.401 V17.6.0 (2023-09)
Non-Patent Literature 3: 3GPP TS 38.211 V17.6.0 (2023-09)
Non-Patent Literature 4: 3GPP TS 38.214 V17.7.0 (2023-09)

### SUMMARY OF INVENTION

### TECHNICAL PROBLEM

In the next generation wireless communication system, for example, reduction of OOBE (Out of band emission), reduction of PAPR (Peak to average power ratio), improvement of SE (Spectral efficiency), and the like are required. Increase of complexity of a transmitter needs to be avoided while satisfying the above-described requirements.

The present invention has been made in view of the above points, and it is an object of the present invention to avoid the increase of complexity of a transmitter in the wireless communication system.

### SOLUTION TO PROBLEM

According to the disclosed technique, a terminal is provided. The terminal includes: a control unit configured to generate a DFT-s-OFDM (Discrete Fourier transform - spread - Orthogonal Frequency Division Multiplexing) signal by performing asymmetric transform precoding between layer mapping and antenna port mapping; and a transmission unit configured to transmit the DFT-s-OFDM signal. The control unit calculates a transport block size based on a parameter related to the asymmetric transform precoding.

### ADVANTAGEOUS EFFECTS OF INVENTION

According to the disclosed technique, it is possible not to increase complexity of a transmitter in the wireless communication system.

### BRIEF DESCRIPTION OF DRAWINGS

[Fig. 1] is a drawing illustrating a configuration example of a wireless communication system in an embodiment of the present invention.
[Fig. 2] is a drawing illustrating an example of a transmitter.
[Fig. 3] is a drawing for describing an example of a transmitter.
[Fig. 4] is a drawing for describing an example of a transmitter in an embodiment of the present invention.
[Fig. 5] is a drawing for describing an example of a transmitter in an embodiment of the present invention.
[Fig. 6] is a drawing for describing an example of a transmitter in an embodiment of the present invention.
[Fig. 7] is a drawing for describing an example of a transmitter.
[Fig. 8] is a drawing for describing an example of a transmitter in an embodiment of the present invention.
[Fig. 9] is a drawing for describing an example of a precoder in an embodiment of the present invention.
[Fig. 10] is a drawing illustrating an example of a functional structure of a base station 10 in an embodiment of the present invention.
[Fig. 11] is a drawing illustrating an example of a functional configuration of a terminal 20 in an embodiment of the present invention.
[Fig. 12] is a drawing illustrating an example of a hardware structure of the base station 10 or the terminal 20 in an embodiment of the present invention.
[Fig. 13] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

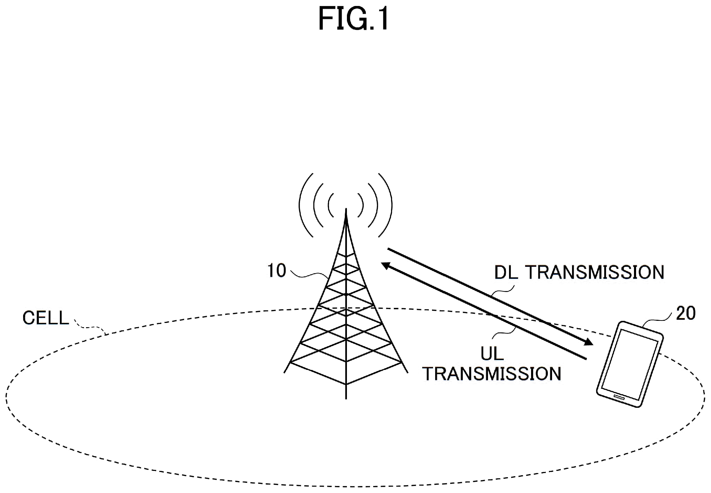

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station apparatus 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

In addition, various requirements for the next generation "6G" are being discussed. For example, the requirements may include the ultra broadband communication, the mission critical communication, the ultra massive connection, the universal coverage, the intelligent connection, the ubiquitous sensing, and the like.

In addition, the requirements may include ultra high speed communication, large capacity communication, ultra coverage enhancement, ultra low energy consumption, low cost, ultra low latency, ultra high reliability communication, massive connectivity and sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

Here, two important KPIs (Key Performance Indicators) in the waveform design are SE (Spectral efficiency) and PE (Power efficiency). In 5G NR, multi-carrier CP-OFDM (Cyclic Prefix - Orthogonal Frequency Division Multiplexing) with high SE is adopted as a main waveform and single-carrier DFT-s-OFDM (Discrete Fourier transform - spread - Orthogonal Frequency Division Multiplexing) with high PE is supported when an uplink coverage is limited. In other words, CP-OFDM is supported for DL, and CP-OFDM and DFT-s-OFDM are supported for UL.

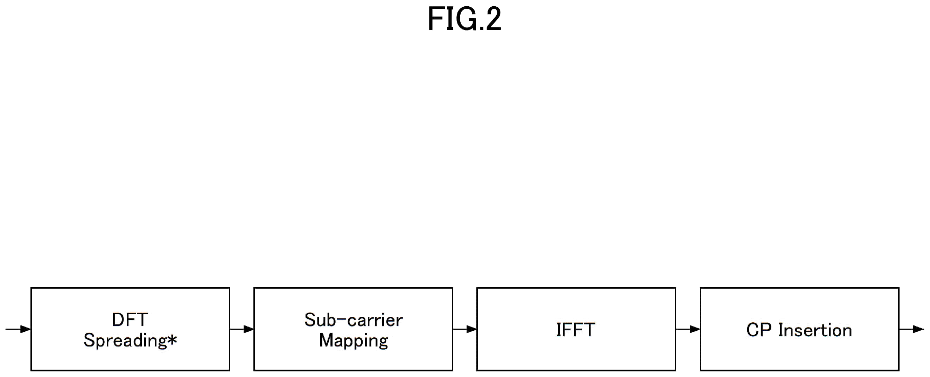

Fig. 2 is a drawing illustrating an example of a transmitter. As illustrated in Fig. 2, in an NR transmitter, DFT Spreading, Sub-carrier Mapping, IFFT (Inverse fast Fourier transform), and CP insersion (Cyclic prefix insertion) are performed in this order. It is to be noted that DFT Spreading may be applied only for UL.

When comparing CP-OFDM and DFT-s-OFDM, achieving the same throughput typically requires DFT-s-OFDM to operate at an SNR approximately 0.5 dB to 2.5 dB higher than that of CP-OFDM.

When comparing CP-OFDM and DFT-s-OFDM, with respect to the same modulation order, DFT-s-OFDM has a PAPR gain approximately 2.6 dB to 4.6 dB higher than that of CP-OFDM.

In order to achieve four KPIs including non-linearity of PA (Power amplifier), high SE, high PE, and low OOBE, there are restrictions for the 6G system design that uses higher frequencies with larger bandwidths. Therefore, high flexibility should be taken into account in the waveform design.

For example, with respect to CP-OFDM, signal distortion and performance degradation are expected to occur due to high PAPR. In a case where an additional PAPR reduction technique is used, the complexity of a CP-OFDM transmitter increases and additional side information transmission is required.

There is, for example, a technique of clipping and filtering as a PAPR reduction technique for CP-OFDM. A predetermined number of clipping processes and filtering processes are repeated between IFFT and CP insertion. In addition, there is a technique of selective mapping. There are a plurality of phase sequences as inputs, a phase sequence with the lowest PAPR is selected and input to CP insertion and side information is transmitted.

For example, DFT-s-OFDM has been adopted for UL in 4G and 5G because DFT-s-OFDM has advantage of achieving low PAPR. Therefore, DFT-s-OFDM is expected to be a candidate for the 6G waveform design.

For example, in order to improve DFT-s-OFDM performance, KPIs including SE improvement, PAPR reduction, OOBE reduction, complexity reduction, and the like may be set.

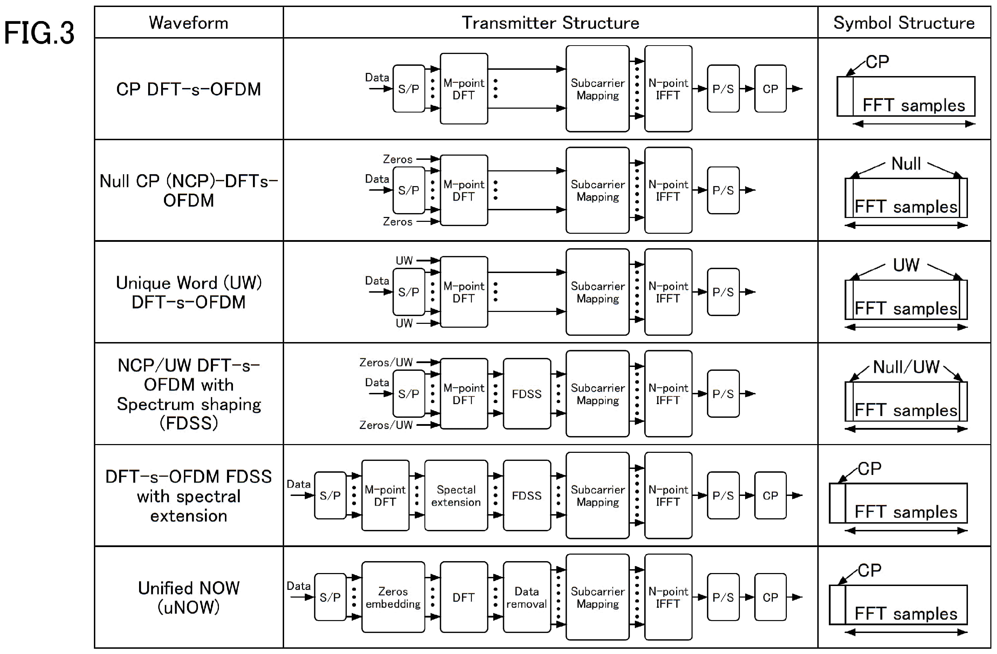

Fig. 3 is a drawing for describing an example of a transmitter. Fig. 3 illustrates a structure example of a transmitter in which DFT-s-OFDM is enhanced.

As illustrated in Fig. 3, with respect to CP DFT-s-OFDM, a transmitter has CP insertion. With respect to the symbol structure, CP is added outside FFT samples.

As illustrated in Fig. 3, with respect to NCP (Null CP) DFT-s-OFDM, zeros are input to M-point DFT. With respect to the symbol structure, CP is included within FFT samples and replaced with zero.

As illustrated in Fig. 3, with respect to UW (Unique word) DFT-s-OFDM, UW is input to M-point DFT. With respect to the symbol structure, CP is included within FFT samples and replaced with zero.

As illustrated in Fig. 3, with respect to NCP or UW DFT-s-OFDM with FDSS (Frequency domain spectrum shaping), zeros or UW are input to M-point DFT and FDSS is used. With respect to the symbol structure, CP is included within FFT samples and replaced with zeros or UW. FDSS is added after DFT precoding.

As illustrated in Fig. 3, with respect to DFT-s-OFDM FDSS with spectrum extension, spectrum extension and FDSS are performed after DFT and CP is inserted. With respect to the symbol structure, CP is added outside FFT samples. A shaping pulse in the time domain is changed by FDSS. The time domain symbol interval is extended by spectrum extension.

As illustrated in Fig. 3, with respect to Unified NOW (uNOW) (Unified Non-Orthogonal Waveform), DFT is performed after zero-insertion, data removal is performed, and CP is inserted. With respect to the symbol structure, CP is added outside FFT samples. The time domain symbol interval is compressed by zero-insertion and data removal before and after DFT precoding.

For example, NCP and UW may be used in order to reduce OOBE. The time domain signal continuity can be ensured and OOBE can be reduced by inserting NCP or UW.

For example, FDSS and FTN (Faster than Nyquist) may be used in order to reduce PAPR The time domain signal correlation can be increased and PAPR can be reduced by using FDSS and FTN.

For example, FTN may be used in order to improve SE. SE can be increased by FTN modulation.

Here, uNOW is used for integrating three techniques of UW, FDSS, and FTN in order to improve three KPIs of SE, PAPR, and OOBE flexibly and simultaneously. Hereinafter, the outline of uNOW will be described.

Time domain FTN compression (α<1) or spectrum extension (α>1) is achieved by performing pre-processing (Pre-processing) and post-processing (Post-processing) in a structure of DFT-s-OFDM baseband transmitter.

The pre-processing is processing of zeros embedding that is performed before cM-point DFT. The post-processing is processing of data removal that is performed after cM-point DFT, and FDSS may be additionally performed. The α is specified by b/c, b is a parameter related to the zeros embedding, and c is a parameter related to the number of DFT points.

A zeros embedding module that is a pre-processing module can achieve flexible time domain compression by inserting zeros irregularly. A data removal and/or FDSS module that is a post-processing module can achieve flexible spectrum extension by performing flexible data removal on one side or on both sides.

In uNOW, performance of SE, PAPR, OOBE can be simultaneously improved by supporting DFT-s-OFDM based on the unified waveform.

Time domain flexible FTN compression and spectrum extension can be achieved by inserting zeros irregularly. For example, zeros embedding may be performed by using α₁=1 for the orthogonal part and by using an FTN compression factor α₂=b/c<1 for the other parts. In addition, for example, zeros embedding may be performed by using an FTN compression factor α₁=b₁/c<1 for a certain part and by using a spectrum extension factor α₂=b₂/c>1 for the other parts.

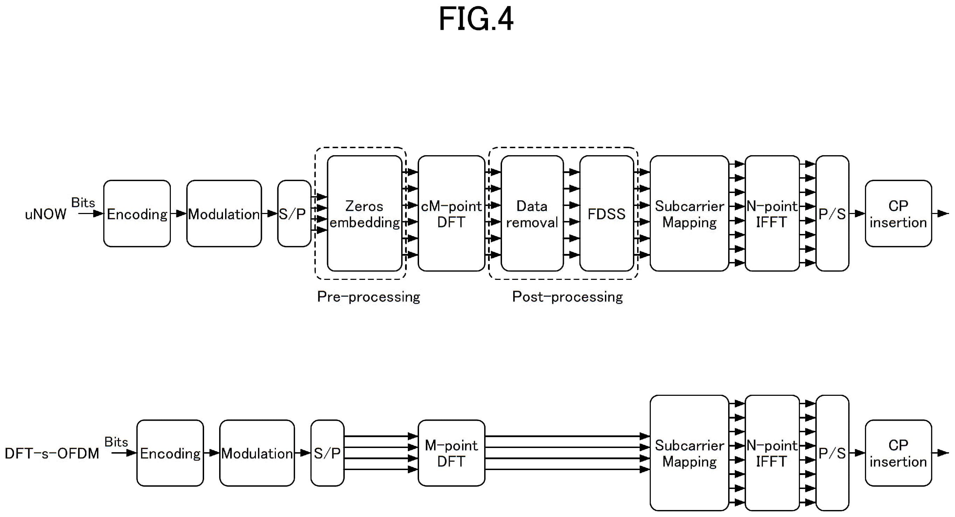

Fig. 4 is a drawing for describing an example of a transmitter in an embodiment of the present invention. Fig. 4 illustrates module comparison between the DFT-s-OFDM transmitter and the uNOW transmitter. Table 1 is a table illustrating complexity comparison between the DFT-s-OFDM transmitter and the uNOW transmitter. As illustrated in Fig. 4, when the uNOW transmitter is compared with the DFT-s-OFDM transmitter, pre-processing and post-processing are added and the DFT size is different.

**[Table 1]**

| Module | Complexity | | Complexity comparison (uNOW vs. DFT-s-OFDM) | |
|---|---|---|---|---|
| | uNOW-v1 | DFT-s-OFDM | alpha=0.75<1 | alpha=1.25>1 |
| Channel coding | *O*(*MLlog*₂*Q*) | *O*(*MLlog*₂*Q*) | 1.4X | 1.8X |
| Modulation | *O*(*ML*) | *O*(*ML*) | | |
| DFT | *O*(*bMlog*₂(*bM*)) | *O*(*Mlog*₂*M*) | | |
| FDSS | *O*(*Mα*) | -- | | |
| IFFT | *O*(*Nlog*₂*N*) | *O*(*NLog*₂*N*) | | |
| Note: Complexity comparison is based on achieving the same SE | | | | |
| • M is the number of subcarriers, e.g., M=66RB for the full bandwidth and L is number of OFDM symbols, e.g., L=14 | | | | |
| • Q is the modulation order, e.g., Q=4 and b is the numerator of compression factor alpha, e.g., $alpha =$ $\frac{3}{4} < 1$ (, i.e., b=3) and $alpha = \frac{5}{4} < 1$ ( i.e., b=5) | | | | |
| • N is the IFFT size, e.g., N=1024 | | | | |

The complexity of the uNOW transmitter is higher than that of the DFT-s-OFDM transmitter. As illustrated in Table 1, the increased complexity is dominated by the larger DFT size. For example, in a case of full bandwidth transmission, that is, in a case of 1,024-point IFFT and 792-point DFT, the complexity will be increased by 1.4 times for α=0.75 and will be increased by 1.8 times for α=1.25 by using the DFT-s-OFDM transmitter as reference.

It is to be noted that the complexity comparison is performed based on a condition of achieving the same SE. M is the number of subcarriers, and may be 66 RBs, for example. L is the number of symbols, and may be 14 symbols, for example. Q is the modulation order, and may be 4, for example; and b is the numerator of the compression factor α, and may be 3 or 5. N is the IFFT size, and may be 1,024, for example.

As described above, the complexity of the uNOW transmitter is larger than the complexity of the DFT-s-OFDM transmitter. Therefore, the complexity of the uNOW transmitter is required to be reduced while maintaining the performance.

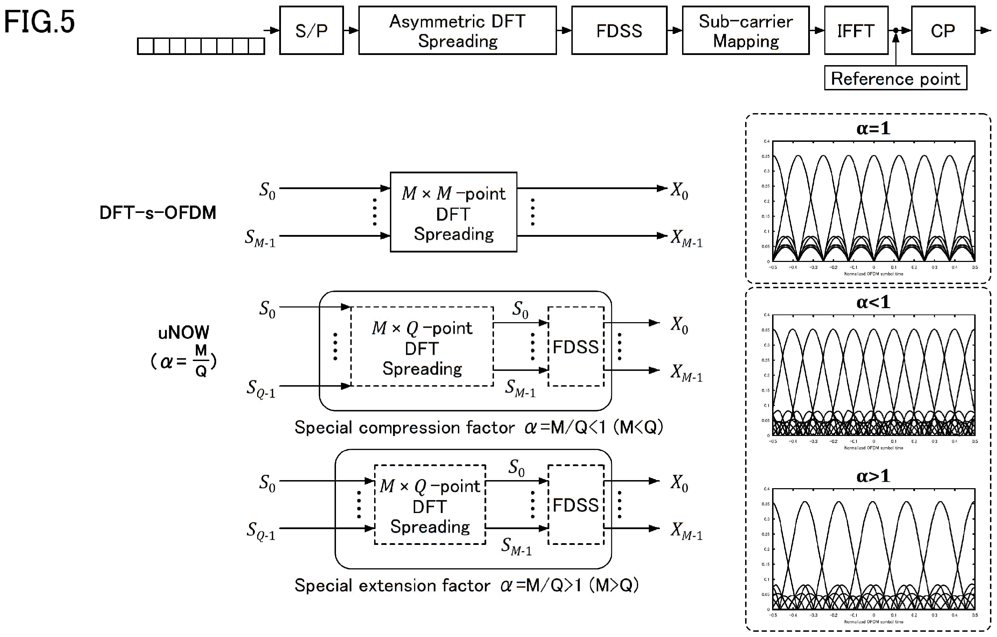

Accordingly, a new transmitter uNOW-v2 is proposed. Fig. 5 is a drawing for describing an example of a transmitter in an embodiment of the present invention. Fig. 5 illustrates a structure in which the complexity is reduced by replacing the zeros embedding, DFT spreading, and data removal modules in the uNOW transmitter with an asymmetric DFT matrix. It is to be noted that FDSS may be additionally performed.

With respect to DFT-s-OFDM, a symmetric DFT matrix with the size M is used. As illustrated in Fig. 5, in uNOW-v2, the long DFT matrix with M<Q is used for the time domain FTN compression (α<1), and the tall DFT matrix with M>Q is used for the spectrum extension (α>1). When one α is supported for one OFDM symbol, the complexity will be reduced as compared with uNOW.

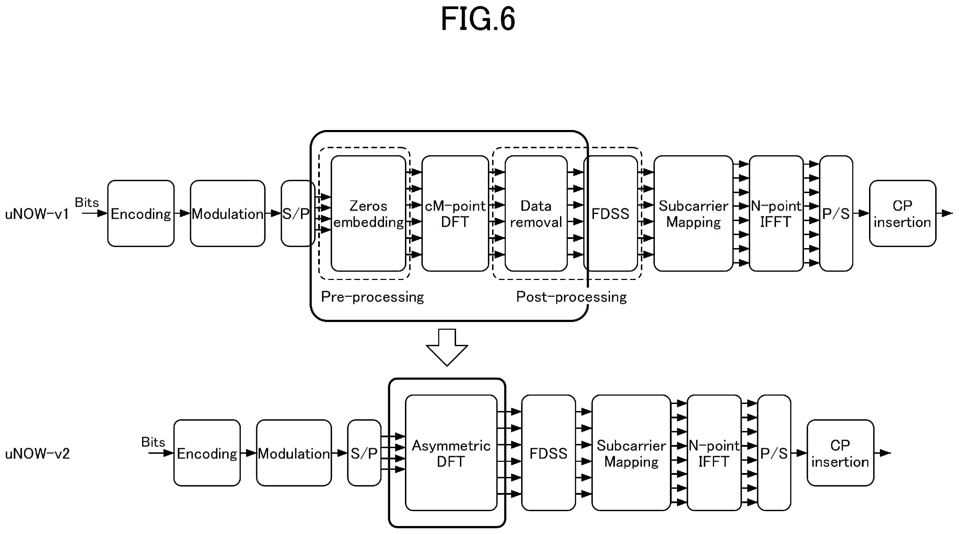

The same level of complexity can be achieved by uNOW-v2 as compared with DFT-s-OFDM. Hereinafter, the conventional uNOW is referred to as uNOW-v1. Fig. 6 is a drawing for describing an example of a transmitter in an embodiment of the present invention. Fig. 6 illustrates module comparison between the uNOW-v1 transmitter and the uNOW-v2 transmitter. Table 2 is a table illustrating complexity comparison among the DFT-s-OFDM transmitter, the uNOW-v1 transmitter, and the uNOW-v2 transmitter.

**[Table 2]**

| Module | Complexity | | | Complexity comparison (uNOW vs. DFT-s-OFDM) | | | |
|---|---|---|---|---|---|---|---|
| | uNOW | | DFT-s-OFDM | alpha=0.75<1 | | Alpha=1.25>1 | |
| | uNOW-v1 | uNOW-v2 | | uNOW-v1 | uNOW-v2 | uNOW-v1 | uNOW-v2 |
| Channel coding | *O*(*MLlog*₂*Q*) | *O*(*MLlog*₂*Q*) | *O*(*MLlog*₂*Q*) | 1.4X | 1.0X | 1.8X | 1.0X |
| Modulation | *O*(*ML*) | *O*(*ML*) | *O(ML)* | | | | |
| DFT | *O*(*bMlog*₂(*bM*)) | *O*(*Mlog*₂(*M*)) | *O*(*Mlog*₂*M*) | | | | |
| FDSS | *O*(*Mα*) | *O*(*Mα*) | - | | | | |
| IFFT | *O*(*Nlog*₂*N*) | *O*(*Nlog*₂*N*) | *O*(*Nlog*₂*N*) | | | | |
| Note: Complexity comparison is based on achieving the same SE | | | | | | | |
| • M is the number of subcarriers, e.g., M=66RB for the full bandwidth and L is number of OFDM symbols, e.g., L=14 | | | | | | | |
| • Q is the modulation order, e.g., Q=4 and b is the numerator of compression factor alpha, e.g., $alpha = \frac{3}{4} < 1$ (, i.e., b=3) and $alpha = \frac{5}{4} < 1$ ( i.e., b=5) | | | | | | | |
| • N is the IFFT size, e.g., N=1024 | | | | | | | |

illustrated in Fig. 6, when the uNOW-v2 transmitter is compared with the uNOW-v1 transmitter, uNOW-v1 zeros embedding, DFT, and data removal are replaced with an asymmetric DFT.

As illustrated in Table 2, when the complexity is compared among the DFT-s-OFDM transmitter, the uNOW-v1 transmitter, and the uNOW-v2 transmitter, in a case where the complexity of the DFt-s-OFDM transmitter is used as reference, the complexity of the uNOW-v1 transmitter is increased by 1.4 times and the complexity of the uNOW-v2 transmitter is increased by 1.0 times for α=0.75, and the complexity of the uNOW-v1 transmitter is increased by 1.4 times and the complexity of the uNOW-v2 transmitter is increased by 1.0 times for α=1.25. Therefore, the complexity of the DFT-s-OFDM transmitter and the complexity of the uNOW-v2 transmitter are at the same level.

It is to be noted that the complexity comparison is performed based on a condition of achieving the same SE. M is the number of subcarriers, and may be 66 RBs, for example. L is the number of symbols, and may be 14 symbols, for example. Q is the modulation order, and may be 4, for example; and b is the numerator of the compression factor α, and may be 3 or 5. N is the IFFT size, and may be 1,024, for example.

It is to be noted that the BLER and PAPR performance is the same level between uNOW-v1 and uNOW-v2.

As described above, in the 6G waveform design, low PAPR is required for NTN (Non terrestrial network) and higher frequency bands such as a millimeter wave band and a sub-THz band. In addition, high SE is required when spatial multiplexing and high-order modulation cannot be used. Therefore, the complexity of the uNOW transmitter is required to be reduced while maintaining low PAPR and high SE.

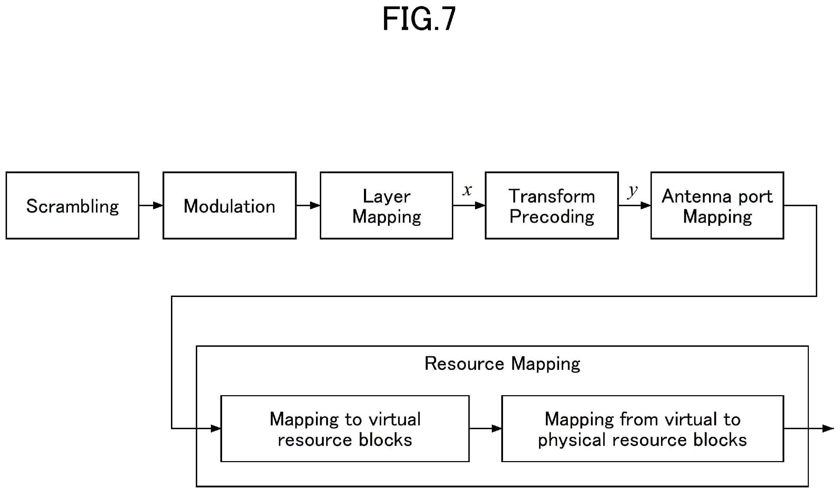

Fig. 7 is a drawing for describing an example of a transmitter. Fig. 7 is a block diagram of a transmitter in 5G NR (refer to Non-Patent Literature 3). As illustrated in FIG. 7, scrambling, modulation, layer mapping, transform precoding, antenna port mapping, mapping to VRBs (mapping to Virtual resource blocks), and mapping to PRBs (mapping to Physical resource blocks) are performed in this order. It is to be noted that the input vector x and the output vector y of the transform precoding have the same dimension.

Operation 1) When CP-OFDM and DFT-s-OFDM are supported, a new signal generation method may be used.

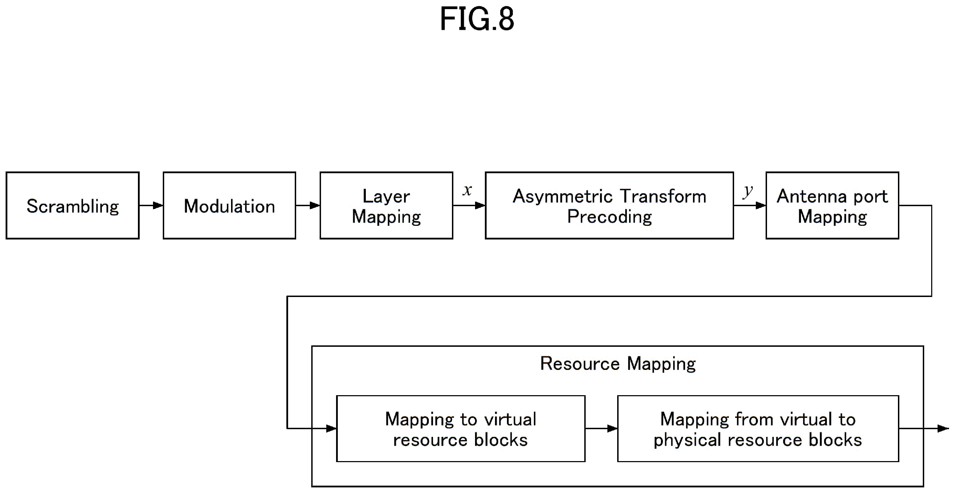

Fig. 8 is a drawing for describing an example of a transmitter in an embodiment of the present invention. Fig. 8 is a block diagram of the uNOW-v2 transmitter. Scrambling, modulation, and layer mapping may be performed as described in Non-Patent Literature 3.

The input vector x of Asymmetric Transform Precoding is the output of the layer mapping and can be expressed as:$x \left(i\right) = {\left[{x}^{\left(0\right)}\left(i\right)...{x}^{\left(v-1\right)}\left(i\right)\right]}^{T} , i = 0,1 , . . . {{, N}_{symb}}^{layer} - 1$ ν is the number of layers and N_{symb}^{layer} is the number of modulation symbols per layer.

The output vector y of Asymmetric Transform Precoding is the input of the antenna port mapping and can be expressed as:$y \left(i\right) = {\left[{y}^{\left(0\right)}\left(i\right)...{y}^{\left(v-1\right)}\left(i\right)\right]}^{T} , i = 0,1 , . . . {{, M}_{symb}}^{layer} - 1$ ν is the number of layers and M_{symb}^{layer} is the number of symbols per layer.

In a case where transform precoding is enabled (refer to Non-Patent Literature 4) and α is configured to be 1 or is not configured by upper layer signaling, that is, in a case of M_{symb}^{layer}₌N_{symb}^{layer}, symmetric transform precoding is used. That is, legacy DFT-s-OFDM is supported. The signal processing of DFT-s-OFDM may reuse the processing of Clause 6.3.1.4 of Non-Patent Literature 3.

In a case where transform precoding is enabled (refer to Non-Patent Literature 4) and α is configured to be either greater than 1 or less than 1 by upper layer signaling, that is, in a case of M_{symb}^{layer}!=N_{symb}^{layer}, asymmetric transform precoding is used. That is, uNOW is supported. The signal processing for asymmetric transform precoding described in the following operation 1-1) is used.

It is to be noted that FDSS may be transparent according to the technical specification. In operation 1-1), FDSS after asymmetric transform precoding is not described.

Operation 1-1) Asymmetric transform precoding for uNOW may be used.

Equation 1 is a mathematical expression indicating the processing of asymmetric transform precoding.$\begin{matrix}{y}^{\left(0\right)} \left(l⋅{M}_{sc}+k\right) = \frac{1}{\sqrt{{M}_{sc}}} {\sum }_{i = 0}^{{N}_{symb} - 1} {x}^{\left(0\right)} \left(l⋅{N}_{symb}+i\right) {e}^{- \frac{j 2 πik}{{N}_{symb}}} , \\ k = 0 , … , {M}_{sc} - 1 , l = 0 , … , \frac{{M}_{symb}^{layer}}{{M}_{sc}} - 1 , {N}_{symb} = \frac{\left({M}_{sc}\right)}{α} , \\ {N}_{symb}^{layer} = {N}_{symb} ⋅ \frac{{M}_{symb}^{layer}}{{M}_{sc}}\end{matrix}$

### OBTAINED BLOCK OF COMPLEX-VALUED SYMBOLS:

${y}^{\left(λ\right)} \left(0\right) , … , {y}^{\left(λ\right)} \left({M}_{symb}^{layer}-1\right) .$

N_{symb} is the number of OFDM modulation symbols in the bandwidth to be arranged before asymmetric transform precoding, and may satisfy the following condition.${N}_{symb} = {2}^{β 2} {* 3}^{β 3} {* 5}^{β 5}$ It is to be noted that β2, β3, and β5 are non-negative integers.

In order for N_{symb} to satisfy the above condition, the value of M_{RB}, the numerator b of α, and the denominator c of α may be limited, respectively.

M_{SC} denotes the number of subcarriers in the bandwidth of PUSCH or PDSCH. M_{SC}=M_{RB} N_{SC}^{RB}, wherein M_{RB} denotes the number of resource blocks in the bandwidth of PUSCH or PDSCH, and N_{SC}^{RB} denotes the number of subcarriers per resource block. M_{RB} may satisfy the following condition.$M = = {2}^{α 2} {* 3}^{α 3} {* 5}^{α 5}$ α2, α3 and α5 are non-negative integers.$α = b / c = {M}_{SC} / {N}_{symb}$ is a time domain FTN compression or spectrum extension factor, and b and c may satisfy the following conditions. $b = {2}^{γ 2 ∗} {3}^{γ 3 ∗} {5}^{γ 5}$ $c = {2}^{ρ 2 ∗} {3}^{ρ 3 ∗} {5}^{ρ 5}$ ρ2, ρ3, ρ5, γ2, γ3 and γ5 are non-negative integers, and may satisfy the following conditions. $ρ 2 = < α 2 + 2 , ρ 3 = < α 3 + 1 , ρ 5 = < α 5$

It is to be noted that only one of the provision in which N_{symb} is a product of a power of 2, a power of 3 and a power of 5 and the provision in which M_{RB,} b and c are products of a power of 2, a power of 3 and a power of 5 may be valid.

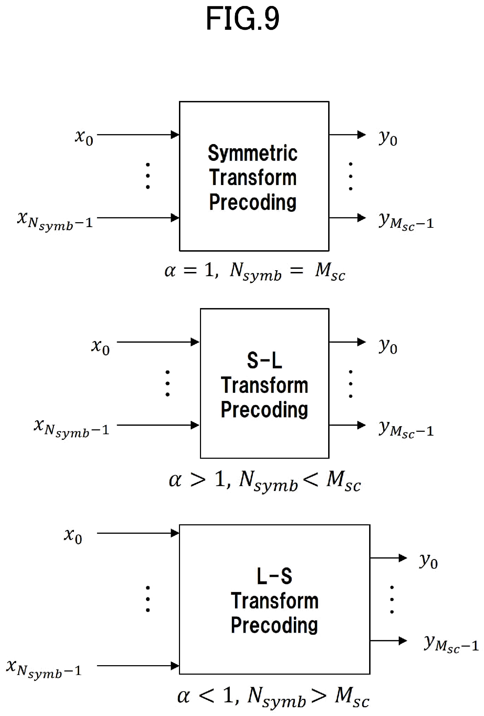

Fig. 9 is a drawing for explaining an example of a precoder in an embodiment of the present invention. As illustrated in Fig. 9, when α=1, the dimension of the input vector and the dimension of the output vector of the asymmetric transform precoding are equal. When α is not 1, the dimension of the input vector and the dimension of the output vector of the asymmetric transform precoding are different.

When α>1, the dimension of the output vector is larger than the dimension of the input vector. The asymmetric transform precoding is defined as S-L transform precoding. As illustrated in Fig. 9, N_{symb}<M_{SC}.

When α<1, the dimension of the output vector is smaller than the dimension of the input vector. The asymmetric transform precoding is defined as L-S transform precoding. As illustrated in Fig. 9, N_{symb}>M_{SC}.

A new transform precoding method for DL and/or UL may be predefined in the technical specification for a certain frequency, for a certain scenario, and/or for a case that is indicated to the UE via the SIB.

Operation 2) A configuration or indication of the transmission signal size may be configured or indicated as described below.

According to Non-Patent Literature 4, the formula for calculating the TBS is as follows:
The number of information bits is N_{info}=N_{RE}*R*Qₘ*ν. R is the target code rate, Qₘ is the modulation order, and ν is the number of layers.

The number of REs of all PRBs is N_{RE=}min(156, N_{RE}')×n_{PRB}. The n_{PRB} is the number of PRBs to be arranged.

N_{RE}' is the number of REs to be arranged in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$ N_{SC}^{RB} is 12, which is the number of subcarriers in one PRB. N_{symb}^{sh} is the number of symbols of PUSCH arranged in a slot. N_{DMRS}^{PRB} is the number of REs of DM-RS per PRB in the allocated period including the overhead of DM-RS CDM groups without data. Nₒₕ^{PRB} is the overhead configured by the information element xOverhead in the upper layer parameter PUSCH-ServingCellConfig. For example, the value may be 6, 12 or 18. If Nₒₕ^{PRB} is not configured, Nₒₕ^{PRB} is assumed to be 0.

Here, if α is not 1, the dimension of the input vector and the dimension of the output vector of the asymmetric transform precoding are different. That is, the calculation method of NR cannot be applied to the calculation method of the number of information bits. NR does not support asymmetric transform precoding. That is, configuration and indication of the time domain FTN compression or spectrum extension factor are not supported.

Operation 2-1) The TBS calculation formula may be changed.

It is to be noted that the PT-RS overhead of each option in operation 2-1-1) and operation 2-1-2) described below may or may not be taken into account. If not, only a viewpoint in which α is related may be taken into account.

Operation 2-1-1) The time domain FTN compression or spectrum extension factor α may be reflected in the calculation of the number of information bits.

Option 1) PT-RS insertion for DFT-s-OFDM enhancement may be executed in the time domain. That is, PT-RS insertion may be executed before DFT. Note that DM-RS insertion for DFT-s-OFDM is executed in the frequency domain, that is, after the transform precoding, and thus, the number of REs of DM-RS does not affect asymmetric transform precoding. Note that PT-RS insertion for DFT-s-OFDM is executed in the time domain, that is, before the transform precoding, and thus, the number of REs of PT-RS affects asymmetric transform precoding and N_{RE} is changed.

Option 1-1) The effects of PT-RS may be reflected in the calculation of the number of information bits.

The number of information bits is N_{info=}(1/α)*(N_{RE}*ν-N_{PTRS}*ν_{PTRS})*R*Qₘ. R is the target code rate, Qₘ is the modulation order, and ν is the number of layers. N_{PTRS} is the total number of samples in the allocated period and bandwidth for each layer. The ν_{PTRS} is the number of layers in which PT-RS is allocated. The effects of α is included in N_{PTRS}.

The number of REs in all PRBs is N_{RE=}min(156, N_{RE}')×n_{PRB}. The n_{PRB} is the number of PRBs allocated.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} {{N}_{oh}}^{PRB}$ N_{SC}^{RB} is 12, which is the number of subcarriers in one PRB. N_{symb}^{sh} is the number of symbols of the allocated PUSCH in a slot. N_{DMRS}^{PRB} is the number of REs for DM-RS per PRB in the allocated period including the overhead of the DM-RS CDM groups without data.

Option 1-2) The influence of the PT-RS may be reflected in the value of N_{DMRS}^{PRB}.

The number of information bits is N_{info}=(1/α)*N_{RE}*R*Qₘ*ν.

N_{RE}' is the number of REs allocated in one PRB. N_{RE}' is calculated as follows: ${N}_{RE} ′ = {{N}_{SC}}^{RB} {{N}_{symb}}^{sh} - {{N}_{DMRS}}^{PRB} - {{N}_{oh}}^{PRB}$
N_{DMRS}^{PRB} is the number of REs for DM-RS and PT-RS and is calculated as follows:
   ${{N}_{DMRS}}^{PRB} = {{N}_{DMRS - DMRS}}^{PRB} + {{αN}_{DMRS - PTRS}}^{PRB}$
N_{DMRS-DMRS}^{PRB} is the number of REs for DM-RS per PRB in the allocated period including the overhead of DM-RS CDM groups without data.
N_{DMRS-PTRS}^{PRB} is the equivalent number of samples for PT-RS per PRB in the allocated period per layer and is calculated as follows:${{N}_{DMRS - PTRS}}^{PRB} = {N}_{DMRS - PTRS} / {n}_{PRB}$
N_{DMRS-PTRS} is equivalent to the total number of samples of PT-RS in the allocated period per layer and is calculated as follows.${N}_{DMRS - PTRS} = {N}_{PTRS} {* v}_{PTRS} / v$
N_{PTRS} is the total number of samples of PT-RS in the allocated period per layer, and ν_{PTRS} is the number of layers allocated with PT-RS.

N_{DMRS-PTRS}^{PRB} is equivalent to the number of samples for PT-RS before DFT spreading, and αN_{DMRS-PTRS}^{PRB} is equivalent to the number of REs for PT-RS after DFT spreading.

The number of REs of all PRBs is N_{RE=}min(156, N_{RE}')*n_{PRB}, where n_{PRB} is the number of allocated PRBs.

Option 1-2') The influence of PT-RS may be reflected in the value of Nₒₕ^{PRB}.

The number of information bits is N_{info=}(1/α)*N_{RE}*R*Qₘ*ν.

N_{RE}' is the number of REs arranged in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$
Nₒₕ^{PRB} is the number of REs for PT-RS, indicates the additional overhead, and is calculated as follows. ${{N}_{oh}}^{PRB} = {{N}_{oh - oh}}^{PRB} + {{αN}_{oh - PTRS}}^{PRB}$
Nₒₕ₋ₒₕ^{PRB}+ is the number of overhead configured by the upper layer.
N_{oh-PTRS}^{PRB} is equivalent to the number of samples for PT-RS per PRB in the allocated period per layer, and is calculated as follows. ${{N}_{oh - PTRS}}^{PRB} = {N}_{oh - PTRS} / {n}_{PRB}$
N_{oh-PTRS} is the total number of samples for PT-RS in the allocated period per layer, and is calculated as follows. ${N}_{oh - PTRS} = {N}_{PTRS} * {ν}_{PTRS} / ν$
N_{PTRS} is the total number of samples of PT-RS in the allocated period and bandwidth per layer, and ν_{PTRS} is the number of layers allocated with PT-RS.

N_{oh-PTRS}^{PRB} is equivalent to the number of samples for PT-RS before DFT spreading, and αN_{oh-PTRS}^{PRB} is equivalent to the number of REs for PT-RS after DFT spreading.

The number of REs of all PRBs is N_{RE=}min(156, N_{RE}')*n_{PRB}, and n_{PRB} is the allocated number of PRBs.

Option 1-3) The influence of PT-RS may be reflected in a new parameter.

Option 1-3-1) The influence of PT-RS may be reflected in a new parameter N_{PTRS}^{PRB} used for calculating N_{RE}'.

N_{RE}'is the number of REs arranged in one PRB. N_{RE}' is calculated as described below. ${N}_{RE} ′ = {{N}_{SC}}^{RB} {{N}_{symb}}^{sh} - {{N}_{DMRS}}^{PRB} - {{αN}_{PTRS}}^{PRB} - {{N}_{oh}}^{PRB}$ N_{DMRS}^{PRB} is the number of REs for DM-RS per PRB in the allocated period including the overhead of the DM-RS CDM groups without data.

N_{PTRS}^{PRB} is equivalent to the number of samples for PT-RS per PRB in the allocated period per layer, and is calculated as follows. ${{N}_{PTRS}}^{PRB} = {N}_{PTRS} ′ / {n}_{PRB}$
N_{PTRS}' is the total number of samples of PT-RS in the allocated period per layer, and is calculated as follows. ${N}_{PTRS} ′ = {N}_{PTRS} ∗ {ν}_{PTRS} / ν$
N_{PTRS} is the total number of samples of PT-RS in the allocated period and bandwidth per layer, and ν_{PTRS} is the number of layers allocated with PT-RS.
N_{PTRS}^{PRB} is equivalent to the number of samples for PT-RS before DFT spreading, and αN_{PTRS}^{PRB} is equivalent to the number of REs for PT-RS after DFT spreading. The number of REs for all PRBs is N_{RE}=min(156, N_{RE}')*n_{PRB} where n_{PRB} is the allocated number of PRBs.

Option 1-3-2) The influence of PT-RS may be reflected in a new parameter N_{PTRS}' used to calculate N_{RE}'.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$ N_{DMRS}^{PRB} is the number of REs for DM-RS per PRB in the allocated period including the overhead of the DM-RS CDM groups without data.

The number of REs of all PRBs is N_{RE}=min(156, N_{RE}')*n_{PRB}-αN_{PTRS}', where n_{PRB} is the number of allocated PRBs.
N_{PTRS}' is the total number of samples of PT-RS in the allocated period per layer and is calculated as follows. ${N}_{PTRS} ′ = {N}_{PTRS} * {ν}_{PTRS} / ν$
N_{PTRS} is the total number of samples of PT-RS in the allocated period and bandwidth per layer and ν_{PTRS} is the number of layers allocated with PT-RS.
N_{PTRS}' is equivalent to the number of samples of PT-RS before DFT spreading, and αN_{PTRS}' is equivalent to the number of REs of PT-RS after DFT spreading.

Option 2) PT-RS insertion for enhanced DFT-s-OFDM may be performed in the frequency domain. That is, PT-RS insertion may be performed after DFT. PT-RS insertion is performed after transform precoding. Unlike DM-RS, PT-RS is not configured in all layers, and thus, it is necessary to define the influence of PT-RS on the number of information bits.

Option 2-1) The influence of PT-RS may be reflected in the calculation of the number of information bits.

The number of information bits is N_{info}=(1/α)*(N_{RE}*ν-N_{PTRS}*ν_{PTRS)}*R*Qₘ. N_{PTRS} is the total number of REs in the allocated period and bandwidth for each layer, and ν_{PTRS} is the number of layers allocated with PT-RS. N_{PTRS} is equivalent to the number of REs of PT-RS after DFT spreading. To obtain the number of samples before DFT spreading, 1/α must be taken into account.

The number of REs for all PRBs is N_{RE}=min(156, N_{RE}')*n_{PRB} where n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$ N_{DMRS}^{PRB} is the number of REs for DM-RS per PRB in the allocated period including the overhead of the DM-RS CDM groups without data.

Option 2-2) The influence of PT-RS may be reflected in N_{DMRS}^{PRB}.

The number of information bits is N_{info}=(1/α)*N_{RE}*R*Qₘ*ν.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$

N_{DMRS}^{PRB} is the number of REs for DM-RS and PT-RS and is calculated as follows. ${{N}_{DMRS}}^{PRB} = {{N}_{DMRS - DMRS}}^{PRB} + {{N}_{DMRS - PTRS}}^{PRB}$
N_{DMRS-DMRS}^{PRB} is the number of REs for DM-RS per PRB in the allocated period including the overhead of the DM-RS CDM groups without data.
N_{DMRS-PTRS}^{PRB} is equivalent to the number of samples of PT-RS per PRB in the allocated period per layer and is calculated as follows. ${{N}_{DMRS - PTRS}}^{PRB} = {N}_{DMRS - PTRS} / {n}_{PRB}$
N_{DMRS-PTRS} is equivalent to the total number of samples of PT-RS in the allocated period per layer and is calculated as follows.${N}_{DMRS - PTRS} = {N}_{PTRS} {* v}_{PTRS} / v$
N_{PTRS} is the total number of PT-RS samples in the allocated period per layer and ν_{PTRS} is the number of layers allocated with PT-RS.

The number of REs for all PRBs is N_{RE}=min(156, N_{RE}')*n_{PRB} where n_{PRB} is the number of allocated PRBs.

Option 2-2') The influence of PT-RS may be reflected in Nₒₕ^{PRB}.

The number of information bits is N_{info}=(1/α)*N_{RE}*R*Qₘ*ν.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$

Nₒₕ^{PRB} is the number of REs for PT-RS and indicates the additional overhead, which is calculated as follows. ${{N}_{oh}}^{PRB} = {{N}_{oh - oh}}^{PRB} + {{N}_{oh - PTRS}}^{PRB}$ Nₒₕ₋ₒₕ^{PRB}+ is the number of overheads configured by an upper layer.

N_{oh-PTRS}^{PRB} is equivalent to the number of samples for PT-RS per PRB in the allocated period per layer and is calculated as follows. ${{N}_{oh - PTRS}}^{PRB} = {N}_{oh - PTRS} / {n}_{PRB}$
N_{oh-PTRS} is the total number of REs of PT-RS in the allocated period per layer and is calculated as follows. ${N}_{oh - PTRS} = {N}_{PTRS} * {ν}_{PTRS} / ν$
N_{PTRS} is the total number of REs of PT-RS in the allocated period and bandwidth per layer and ν_{PTRS} is the number of layers allocated with PT-RS.

The number of REs for all PRBs is N_{RE}=min(156, N_{RE}')*n_{PRB} and n_{PRB} is the number of allocated PRBs.

Option 2-3) The influence of PT-RS may be reflected in a new parameter.

Option 2-3-1) The influence of PT-RS may be reflected in a new parameter N_{PTRS}^{PRB} used to calculate N_{RE}'.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{PTRS}}^{PRB} - {{N}_{oh}}^{PRB}$ N_{DMRS}^{PRB} is the number of REs for DM-RS per PRB in the allocated period including the overhead of the DM-RS CDM groups without data.

N_{PTRS}^{PRB} is equivalent to the number of REs for PT-RS per PRB in the allocated period per layer and is calculated as follows. ${{N}_{PTRS}}^{PRB} = {N}_{PTRS} ′ / {n}_{PRB}$
N_{PTRS}' is the total number of REs for PT-RS in the allocated period per layer and is calculated as follows. ${N}_{PTRS} ′ = {N}_{PTRS} * {ν}_{PTRS} / ν$
N_{PTRS} is the total number of REs of PT-RS in the allocated period and bandwidth per layer and ν_{PTRS} is the number of layers allocated with PT-RS.
The number of REs for all PRBs is N_{RE}=min(156, N_{RE}')*n_{PRB} and n_{PRB} is the number of allocated PRBs.

Option 2-3-2) The influence of PT-RS may be reflected in a new parameter N_{PTRS}' used to calculate N_{RE}'.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$ N_{DMRS}^{PRB} is the number of REs for DM-RS per PRB in the allocated period including the overhead of the DM-RS CDM groups without data.

The number of REs for all PRBs is N_{RE}=min(156, N_{RE}')*n_{PRB}-N_{PTRS}' where n_{PRB} is the number of allocated PRBs.
N_{PTRS}' is the total number of REs for PT-RS in the allocated period per layer and is calculated as follows. ${N}_{PTRS} ′ = {N}_{PTRS} ∗ {ν}_{PTRS} / ν$
N_{PTRS} is the total number of REs of PT-RS in the allocated period and bandwidth per layer and ν_{PTRS} is the number of layers allocated with PT-RS.

Operation 2-1-2) The time domain FTN compression or spectrum extension factor α may be reflected in the calculation of the number of REs for all PRBs.

Option 1) PT-RS insertion for DFT-s-OFDM enhancement may be performed in the time domain.

Option 1-1) The influence of PT-RS may be reflected in the calculation of the number of information bits.

The number of information bits is N_{info}=(N_{RE}*ν-N_{PTRS}*ν_{PTRS})*R*Qₘ. R is the target code rate, Qₘ is the modulation order, and ν is the number of layers. N_{PTRS} is the total number of samples of PT-RS in the allocated period and bandwidth for each layer, and ν_{PTRS} is the number of layers.

The number of REs for all PRBs is N_{RE}=(1/α)*min(156, N_{RE}')*n_{PRB}, and n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$ N_{SC}^{RB} is 12, which is the number of subcarriers in one PRB. N_{symb}^{sh} is the number of PUSCH symbols allocated in a slot. N_{DMRS}^{PRB} is the number of REs for DM-RS per PRB in the allocated period including the overhead of the DM-RS CDM groups without data.

Option 1-2) The influence of PT-RS may be reflected in the value of N_{DMRS}^{PRB}.

The number of information bits is N_{info}=N_{RE}*R*Qₘ*ν. R is the target code rate, Qₘ is the modulation order, and ν is the number of layers.

The number of REs for all PRBs is N_{RE}=(1/α)min(156, N_{RE}')*n_{PRB}, and n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$
N_{DMRS}^{PRB} is the number of REs for DM-RS and PT-RS and is calculated as follows. ${{N}_{DMRS}}^{PRB} = {{N}_{DMRS - DMRS}}^{PRB} + {{αN}_{DMRS - PTRS}}^{PRB}$
N_{DMRS-DMRS}^{PRB} is the number of REs for DM-RS per PRB in the allocated period including the overhead of DM-RS CDM groups without data.
N_{DMRS-PTRS}^{PRB} is the equivalent number of samples for PT-RS per PRB in the allocated period per layer and is calculated as follows: ${{N}_{DMRS - PTRS}}^{PRB} = {N}_{DMRS - PTRS} / {n}_{PRB}$
N_{DMRS-PTRS} is equivalent to the total number of samples of PT-RS in the allocated period per layer and is calculated as follows. ${N}_{DMRS - PTRS} = {N}_{PTRS} * {ν}_{PTRS} / ν$
N_{PTRS} is the total number of samples of PT-RS in the allocated period per layer, and ν_{PTRS} is the number of layers allocated with PT-RS.

N_{DMRS-PTRS}^{PRB} is equivalent to the number of samples of PT-RS before DFT spreading, and αN_{DMRS-PTRS}^{PRB} is equivalent to the number of REs of PT-RS after DFT spreading.

Option 1-2') The influence of PT-RS may be reflected in the value of Nₒₕ^{PRB}.

The number of information bits is N_{info}=N_{RE}*R*Qₘ*ν.
R is the target code rate, Qₘ is the modulation order, and ν is the number of layers.

The number of REs for all PRBs is N_{RE}=(1/α)*min(156, N_{RE}')*n_{PRB} where n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$
Nₒₕ^{PRB} is the number of REs for PT-RS, indicates the additional overhead, and is calculated as follows. ${{N}_{oh}}^{PRB} = {{N}_{oh - oh}}^{PRB} + {{αN}_{oh - PTRS}}^{PRB}$
Nₒₕ₋ₒₕ^{PRB}+ is the number of overhead configured by the upper layer.
N_{oh-PTRS}^{PRB} is equivalent to the number of samples for PT-RS per PRB in the allocated period per layer, and is calculated as follows. ${{N}_{oh - PTRS}}^{PRB} = {N}_{oh - PTRS} / {n}_{PRB}$
N_{oh-PTRS} is the total number of samples for PT-RS in the allocated period per layer, and is calculated as follows. ${N}_{oh - PTRS} = {N}_{PTRS} * {ν}_{PTRS} / ν$
N_{PTRS} is the total number of samples of PT-RS in the allocated period and bandwidth per layer, and ν_{PTRS} is the number of layers allocated with PT-RS.

N_{oh-PTRS}^{PRB} is equivalent to the number of samples of PT-RS before DFT spreading, and αN_{oh-PTRS}^{PRB} is equivalent to the number of REs of PT-RS after DFT spreading.
Option 1-3) The influence of PT-RS may be reflected in a new parameter.

Option 1-3-1) The influence of PT-RS may be reflected in a new parameter N_{PTRS}^{PRB} used to calculate N_{RE}'.

The number of information bits is N_{info}=N_{RE}*R*Qₘ*ν.
R is the target code rate, Qₘ is the modulation order and ν is the number of layers.

The number of REs for all PRBs is N_{RE}=(1/α)*min(156, N_{RE}')*n_{PRB} where n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{αN}_{PTRS}}^{PRB} - {{N}_{oh}}^{PRB}$

N_{DMRS}^{PRB} is the number of REs for DM-RS per PRB in the allocated period including the overhead of the DM-RS CDM groups without data.

N_{PTRS}^{PRB} is equivalent to the number of samples of PT-RS per PRB in the allocated period per layer and is calculated as follows. ${{N}_{PTRS}}^{PRB} = {N}_{PTRS} ′ / {n}_{PRB}$
N_{PTRS}' is the total number of REs for PT-RS in the allocated period per layer and is calculated as follows. ${N}_{PTRS} ′ = {N}_{PTRS} * {ν}_{PTRS} / ν$
N_{PTRS} is the total number of REs of PT-RS in the allocated period and bandwidth per layer and ν_{PTRS} is the number of layers allocated with PT-RS.
N_{PTRS}^{PRB} is equivalent to the number of samples of PT-RS before DFT spreading, and αN_{PTRS}^{PRB} is equivalent to the number of REs of PT-RS after DFT spreading.

Option 1-3-2) The influence of PT-RS may be reflected in a new parameter N_{PTRS}' used to calculate N_{RE}'.

The number of REs for all PRBs is N_{RE}=(1/α)*min(156, N_{RE}')*n_{PRB}-N_{PTRS}' where n_{PRB} is the number of allocated PRBs.
N_{PTRS}' is the total number of samples of PT-RS in the allocated period per layer and is calculated as follows.${N}_{PTRS} ' = {N}_{PTRS} {* v}_{PTRS} / v$
N_{PTRS} is the total number of samples of PT-RS in the allocated period and bandwidth per layer and ν_{PTRS} is the number of layers allocated with PT-RS.

N_{PTRS}' is equivalent to the number of samples of PT-RS before DFT spreading and αN_{PTRS}' is equivalent to the number of REs of PT-RS after DFT spreading.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$ N_{DMRS}^{PRB} is the number of REs for DM-RS per PRB in the allocated period including the overhead of the DM-RS CDM groups without data.

Option 2) PT-RS insertion for DFT-s-OFDM enhancement may be performed in the frequency domain.

Option 2-1) The influence of PT-RS may be reflected in the calculation of the number of information bits.

The information bit number is N_{info}=(N_{RE}*ν-(1/α)*N_{PTRS}*ν_{PTRS)}*R*Qₘ. R is the target code rate, Qₘ is the modulation order, and ν is the number of layers.
N_{PTRS} is the total number of REs of PT-RS in the allocated period and bandwidth for each layer, and ν_{PTRS} is the number of layers. N_{PTRS} is equivalent to the number of REs of PT-RS after DFT spreading. To obtain the number of samples before DFT spreading, 1/α should be taken into account.

The number of REs for all PRBs is N_{RE}=(1/α)*min(156, N_{RE}')*n_{PRB} where n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$ N_{DMRS}^{PRB} is the number of REs for DM-RS per PRB in the allocated period including the overhead of the DM-RS CDM groups without data.

Option 2-2) The influence of PT-RS may be reflected in N_{DMRS}^{PRB}.

The number of information bits is N_{info}=N_{RE}*R*Qₘ*ν. R is the target code rate, Qₘ is the modulation order, and ν is the number of layers.

The number of REs for all PRBs is N_{RE}=(1/α)*min(156, N_{RE}')*n_{PRB} where n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$

N_{DMRS}^{PRB} is the number of REs for DM-RS and PT-RS and is calculated as follows. ${{N}_{DMRS}}^{PRB} = {{N}_{DMRS - DMRS}}^{PRB} + {{N}_{DMRS - PTRS}}^{PRB}$
N_{DMRS-DMRS}^{PRB} is the number of REs of DM-RS per PRB in the allocated period including the overhead of the DM-RS CDM groups without data.
N_{DMRS-PTRS}^{PRB} is equivalent to the number of samples of PT-RS per PRB in the allocated period per layer and is calculated as follows. ${{N}_{DMRS - PTRS}}^{PRB} = {N}_{DMRS - PTRS} / {n}_{PRB}$
N_{DMRS-PTRS} is equivalent to the total number of samples of PT-RS in the allocated period per layer and is calculated as follows. ${N}_{DMRS - PTRS} = {N}_{PTRS} * {ν}_{PTRS} / ν$
N_{PTRS} is the total number of PT-RS samples in the allocated period per layer and ν_{PTRS} is the number of layers allocated with PT-RS.

Option 2-2') The influence of PT-RS may be reflected in Nₒₕ^{PRB}.

The number of information bits is N_{info}=N_{RE}*R*Qₘ*ν. R is the target code rate, Qₘ is the modulation order and ν is the number of layers.

The number of REs for all PRBs is N_{RE}=(1/α)*min(156, N_{RE}')*n_{PRB} where n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$

Nₒₕ^{PRB} is the number of REs for PT-RS, indicates the additional overhead, and is calculated as follows. ${{N}_{oh}}^{PRB} = {{N}_{oh - oh}}^{PRB} + {{αN}_{oh - PTRS}}^{PRB}$
Nₒₕ₋ₒₕ^{PRB}+ is the number of overhead configured by the upper layer.
N_{oh-PTRS}^{PRB} is equivalent to the number of samples for PT-RS per PRB in the allocated period per layer, and is calculated as follows. ${{N}_{oh - PTRS}}^{PRB} = {N}_{oh - PTRS} / {n}_{PRB}$
N_{oh-PTRS} is the total number of REs for PT-RS in the allocated period per layer, and is calculated as follows. ${N}_{oh - PTRS} = {N}_{PTRS} * {ν}_{PTRS} / ν$
N_{PTRS} is the total number of REs of PT-RS in the allocated period and bandwidth per layer and ν_{PTRS} is the number of layers allocated with PT-RS.

Option 2-3) The influence of PT-RS may be reflected in a new parameter.

The number of information bits is N_{info}=N_{RE}*R*Qₘ*ν. R is the target code rate, Qₘ is the modulation order and ν is the number of layers.

Option 2-3-1) The influence of PT-RS may be reflected in a new parameter N_{PTRS}^{PRB} used to calculate N_{RE}'.

The number of REs for all PRBs is N_{RE}=(1/α)*min(156, N_{RE}')*n_{PRB} where n_{PRB} is the number of allocated PRBs.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{PTRS}}^{PRB} - {{N}_{oh}}^{PRB}$

N_{DMRS}^{PRB} is the number of REs for DM-RS per PRB in the allocated period including the overhead of the DM-RS CDM groups without data.

N_{PTRS}^{PRB} is equivalent to the number of REs for PT-RS per PRB in the allocated period per layer and is calculated as follows. ${{N}_{PTRS}}^{PRB} = {N}_{PTRS} ′ / {n}_{PRB}$
N_{PTRS}' is the total number of REs for PT-RS in the allocated period per layer and is calculated as follows. ${N}_{PTRS} ′ = {N}_{PTRS} * {ν}_{PTRS} / ν$
N_{PTRS} is the total number of REs of PT-RS in the allocated period and bandwidth per layer and ν_{PTRS} is the number of layers allocated with PT-RS.

Option 2-3-2) The influence of PT-RS may be reflected in a new parameter N_{PTRS}' used to calculate N_{RE}'.

The number of REs for all PRBs is N_{RE}=(1/α)*(min(156, N_{RE}')*n_{PRB}-N_{PTRS}') and n_{PRB} is the number of allocated PRBs.

N_{PTRS}' is the total number of REs of PT-RS in the allocated period per layer and is calculated as follows. ${N}_{PTRS} ′ = {N}_{PTRS} * {ν}_{PTRS} / ν$ N_{PTRS} is the total number of REs of PT-RS in the allocated period and bandwidth per layer and ν_{PTRS} is the number of layers allocated with PT-RS.

N_{RE}' is the number of REs allocated in one PRB. N_{RE}' is calculated as follows. ${N}_{RE} ′ = {{N}_{SC}}^{RB} {{N}_{symb}}^{sh} - {{N}_{DMRS}}^{PRB} - {{N}_{oh}}^{PRB}$ N_{DMRS}^{PRB} is the number of REs for DM-RS per PRB in the allocated period including the overhead of the DM-RS CDM groups without data.

Operation 2-2) Configuration and notification of the time domain FTN compression or spectrum extension factor α may be performed as described below.

Operation 2-2-1) The time domain FTN compression or spectrum extension factor α and the MCS (Modulation and coding scheme) table may be jointly defined. For example, a new column may be added to the MCS index table. The conventional procedures and signaling for NR MCS may be reused.

Option 1) The target SE and modulation order may be unchanged, and α and the code rate may be combined. Table 3 shows an example of the MCS table for option 1).

**[Table 3]**

| MCS Index I_{MCS} | Modulation Order Qₘ | Target code Rate R x [1024] | Factor *α* | Spectral efficiency |
|---|---|---|---|---|
| 0 | 2 | 120 | 1 | 0.2344 |
| 1 | 2 | 144 | 6/5 | 0.2344 |
| 2 | 2 | 150 | 5/4 | 0.2344 |
| 3 | 2 | 180 | 3/2 | 0.2344 |
| 4 | 2 | 240 | 2 | 0.2344 |
| 5 | 2 | 193 | 1 | 0.3770 |
| 6 | 2 | 232 | 6/5 | 0.3770 |
| 7 | 2 | 241 | 5/4 | 0.3770 |
| 8 | 2 | 290 | 3/2 | 0.3770 |
| 9 | 2 | 386 | 2 | 0.3770 |
| 10 | 2 | 308 | 1 | 0.6016 |
| 11 | 2 | 231 | 3/4 | 0.6016 |
| 12 | 2 | 277 | 9/10 | 0.6016 |
| 13 | 2 | 370 | 6/5 | 0.6016 |
| 14 | 2 | 385 | 5/4 | 0.6016 |
| 15 | 2 | 462 | 3/2 | 0.6016 |
| 16 | 2 | 616 | 2 | 0.6016 |
| 17 | 2 | 449 | 1 | 0.8770 |
| 18 | 2 | 337 | 3/4 | 0.8870 |
| 19 | 2 | 359 | 4/5 | 0.8870 |
| 20 | 2 | 404 | 9/10 | 0.8870 |
| 21 | 2 | 538 | 6/5 | 0.8870 |
| 22 | 2 | 561 | 5/4 | 0.8870 |
| 23 | 2 | 602 | 1 | 1.1758 |
| 24 | 2 | 451 | 3/4 | 1.1758 |
| 25 | 2 | 482 | 4/5 | 1.1758 |
| 26 | 2 | 541 | 9/10 | 1.1758 |
| 27 | 2 | 722 | 6/5 | 1.1758 |
| 28 | 4 | 462 | 0.75 | 1.1758 |
| 29 | 4 | 378 | 1 | 1.4766 |
| 30 | 4 | 454 | 6/5 | 1.4766 |
| 31 | 4 | 473 | 5/4 | 1.4766 |
| 32 | 4 | 567 | 3/2 | 1.4766 |
| 33 | 4 | 756 | 2 | 1.4766 |
| 33 | 4 | 434 | 1 | 1.6953 |
| 34 | 4 | 521 | 6/5 | 1.6953 |
| 35 | 4 | 542 | 5/4 | 1.6953 |
| 36 | 4 | 650 | 3/2 | 1.6953 |
| 37 | 4 | 490 | 1 | 1.9141 |
| 38 | 4 | 588 | 6/5 | 1.9141 |
| 39 | 4 | 612 | 5/4 | 1.9141 |
| 40 | 4 | 553 | 1 | 2.1602 |
| 41 | 4 | 664 | 6/5 | 2.1602 |
| 42 | 4 | 616 | 1 | 2.4063 |
| 43 | 6 | 517 | 1 | 3.0293 |
| 44 | 6 | 620 | 6/5 | 3.0293 |
| 45 | 6 | 567 | 1 | 3.3223 |
| 46 | 6 | 680 | 6/5 | 3.3223 |
| 47 | 6 | 616 | 1 | 3.6094 |
| 48 | 6 | 666 | 1 | 3.9023 |
| 49 | 6 | 719 | 1 | 4.2129 |
| 50 | 8 | 948 | 1 | 7.4063 |

Rule 1: The value of α may be associated with a modulation order. For example, in a case of high modulation orders such as a modulation order greater than 2, only α that is greater than 1 or that is equal to or greater than 1 may be supported. It is to be noted that α less than 1 is not required to be applied to high modulation orders. Of the rows in Table 3, MCS indexes 29 to 50 correspond to rule 1.

Rule 2: The number of α may be associated with a code rate. Of the rows in Table 3, MCS indexes 0 to 28 correspond to rule 2.

In a case of α<1, a small number of α may be associated with a low code rate and a large number of α may be associated with a high code rate. In a case of a low code rate, no further configuration to decrease the code rate may be configured. To control the overhead, only a small number of α may be configured for a low code rate.

In a case of α>1, a large number of α may be associated with a low code rate and a small number of α may be associated with a high code rate. In a case of a high code rate, no further configuration to increase the code rate may be configured. To control the overhead, only a small number of α may be configured for a high code rate.

Option 2) The α and modulation order may be combined without changing the target SE and code rate. Table 4 shows an example of the MCS table for option 2).

**[Table 4]**

| MCS Index I_{MCS} | Modulation Order Qₘ | Target code Rate R x [1024] | Factor *α* | Spectral efficiency |
|---|---|---|---|---|
| 0 | 2 | 120 | 1 | 0.2344 |
| 1 | 4 | 120 | 2 | 0.2344 |
| 2 | 2 | 193 | 1 | 0.3770 |
| 3 | 4 | 193 | 2 | 0.3370 |
| 4 | 2 | 308 | 1 | 0.6016 |
| 5 | 4 | 308 | 2 | 0.6016 |
| 6 | 2 | 449 | 1 | 0.8770 |
| 7 | 4 | 449 | 2 | 0.8770 |
| 8 | 2 | 602 | 1 | 1.1758 |
| 9 | 2 | 602 | 2 | 1.1758 |
| 10 | 4 | 378 | 1 | 1.4766 |
| 11 | 2 | 378 | 0.5 | 1.4766 |
| 12 | 6 | 378 | 3/2 | 1.4766 |
| 13 | 8 | 378 | 2 | 1.4766 |
| 14 | 4 | 434 | 1 | 1.6953 |
| 15 | 2 | 434 | 0.5 | 1.6953 |
| 16 | 6 | 434 | 3/2 | 1.6953 |
| 17 | 8 | 434 | 2 | 1.6953 |
| 18 | 4 | 490 | 1 | 1.9141 |
| 19 | 2 | 490 | 0.5 | 1.9141 |
| 20 | 6 | 490 | 3/2 | 1.9141 |
| 21 | 8 | 490 | 2 | 1.9141 |
| 22 | 4 | 553 | 1 | 2.1602 |
| 23 | 2 | 553 | 0.5 | 2.1602 |
| 24 | 6 | 553 | 3/2 | 2.1602 |
| 25 | 8 | 553 | 2 | 2.1602 |
| 26 | 4 | 616 | 1 | 2.4063 |
| 27 | 2 | 616 | 0.5 | 2.4063 |
| 28 | 6 | 616 | 3/2 | 2.4063 |
| 29 | 8 | 616 | 2 | 2.4063 |
| 30 | 4 | 658 | 1 | 2.5703 |
| 31 | 2 | 658 | 0.5 | 2.5703 |
| 32 | 6 | 658 | 3/2 | 2.5703 |
| 33 | 8 | 658 | 2 | 2.5703 |
| 33 | 6 | 466 | 1 | 2.7305 |
| 34 | 4 | 466 | 2/3 | 2.7305 |
| 35 | 8 | 466 | 4/3 | 2.7305 |
| 36 | 6 | 517 | 1 | 3.0293 |
| 40 | 4 | 517 | 2/3 | 3.0293 |
| 41 | 8 | 517 | 4/3 | 3.0293 |
| 42 | 6 | 567 | 1 | 3.3223 |
| 43 | 4 | 567 | 2/3 | 3.3223 |
| 44 | 8 | 567 | 4/3 | 3.3223 |
| 45 | 6 | 616 | 1 | 3.6094 |
| 46 | 4 | 616 | 2/3 | 3.6094 |
| | 8 | 616 | 4/3 | 3.6094 |
| 47 | 6 | 666 | 1 | 3.9023 |
| 48 | 4 | 666 | 2/3 | 3.9023 |
| 49 | 8 | 666 | 4/3 | 3.9023 |
| 50 | 6 | 719 | 1 | 4.2129 |
| 51 | 4 | 719 | 2/3 | 4.2129 |
| 52 | 8 | 719 | 4/3 | 4.2129 |
| 53 | 6 | 772 | 1 | 4.5234 |
| 54 | 4 | 772 | 2/3 | 4.5234 |
| 55 | 8 | 772 | 4/3 | 4.5234 |
| 56 | 6 | 822 | 1 | 4.8164 |
| 57 | 4 | 822 | 2/3 | 4.8164 |
| 58 | 8 | 822 | 4/3 | 4.8164 |
| 59 | 6 | 873 | 1 | 5.1152 |
| 60 | 4 | 873 | 2/3 | 5.1152 |
| 61 | 8 | 873 | 4/3 | 5.1152 |

Option 3) The modulation order and code rate in NR may be reused, and α may be added.

Option 3-1) Choices of target SE may be added. SE can be flexibly adapted. MCS table size becomes large. Table 5 shows an example of MCS table for option 3-1).

**[Table 5]**

| MCS Index I_{MCS} | Modulation Order Qₘ | Target code Rate R x [1024] | Factor *α* | Spectral efficiency |
|---|---|---|---|---|
| 0 | 2 | 120 | 1 | 0.2344 |
| 1 | 2 | 120 | 3/4 | 0.3125 |
| 2 | 2 | 120 | 4/5 | 0.2930 |
| 3 | 2 | 120 | 9/10 | 0.2640 |
| 4 | 2 | 120 | 6/5 | 0.1953 |
| 5 | 2 | 120 | 5/4 | 0.1875 |
| 6 | 2 | 120 | 3/2 | 0.1562 |
| 7 | 2 | 120 | 2 | 0.1172 |
| 8 | 2 | 193 | 1 | 0.3770 |
| 9 | 2 | 193 | 3/4 | 0.5027 |
| 10 | 2 | 193 | 4/5 | 0.4712 |
| 11 | 2 | 193 | 9/10 | 0.4188 |
| 12 | 2 | 193 | 6/5 | 0.3141 |
| 13 | 2 | 193 | 5/4 | 0.3016 |
| 14 | 2 | 193 | 3/2 | 0.2351 |
| 15 | 2 | 193 | 2 | 0.1885 |
| 16 | 2 | 308 | 1 | 0.6016 |
| 17 | 2 | | | |
| 18 | 2 | | | |
| 19 | 2 | | | |
| 20 | 2 | | | |
| 21 | 2 | | | |
| 22 | 2 | | | |
| 23 | 2 | | | |
| 24 | 2 | | | |
| 25 | 4 | 378 | 1 | 1.4766 |
| 26 | 4 | 378 | 6/5 | 1.2305 |
| 27 | 4 | 378 | 5/4 | 1.1812 |
| 28 | 4 | 378 | 3/2 | 0.9844 |
| 29 | 4 | 378 | 2 | 0.7383 |
| 30 | 4 | 434 | 1 | 1.6953 |
| 31 | 4 | 434 | 6/5 | 1.4128 |
| 32 | 4 | 434 | 5/4 | 1.3562 |
| 33 | 4 | 434 | 3/2 | 1.1302 |
| 34 | 4 | 434 | 2 | 0.8477 |
| 35 | 4 | 490 | 1 | 1.9141 |
| 36 | 4 | | | |
| 37 | 4 | | | |
| 38 | 4 | | | |
| 39 | 4 | | | |
| 40 | 4 | | | |
| 41 | 4 | | | |
| 42 | 6 | 466 | 1 | 2.7305 |
| 43 | 6 | 466 | 6/5 | 2.2754 |
| 44 | 6 | 466 | 5/4 | 2.1844 |
| 45 | 6 | 466 | 3/2 | 1.8203 |
| 46 | 6 | 466 | 2 | 1.3652 |
| 47 | 6 | 517 | 1 | 3.0293 |
| 48 | 6 | | | |
| 49 | 6 | | | |
| 50 | 6 | | | |
| 51 | 6 | | | |
| 52 | 6 | | | |

Option 3-2) Some target SEs may be changed without changing the MCS table size. Table 6 shows an example of the MCS table for option 3-2).

**[Table 6]**

| MCS Index I_{MCS} | Modulation Order Qₘ | Target code Rate R x [1024] | Factor *α* | Spectral efficiency |
|---|---|---|---|---|
| 0 | 2 | 120 | 1 | 0.2344 |
| 1 | 2 | 120 | 4/5 | 0.2930 |
| 2 | 2 | 120 | 5/4 | 0.1875 |
| 3 | 2 | 193 | 1 | 0.3770 |
| 4 | 2 | 193 | 4/5 | 0.4713 |
| 5 | 2 | 193 | 5/4 | 0.3016 |
| 6 | 2 | 308 | 1 | 0.6016 |
| 7 | 2 | 308 | 9/10 | 0.6684 |
| 8 | 2 | 308 | 5/4 | 0.4813 |
| 9 | 2 | 449 | 9/10 | 0.9744 |
| 7 | 2 | 602 | 9/10 | 1.3064 |
| 8 | 4 | 378 | 1 | 1.4766 |
| 9 | 4 | 378 | 5/4 | 1.1813 |
| 10 | 4 | 490 | 5/4 | 1.5312 |
| 11 | 4 | 553 | 5/4 | 1.7281 |
| 12 | 4 | 553 | 1 | 2.1602 |
| 13 | 4 | 616 | 1 | 2.4062 |
| 14 | 4 | 658 | 1 | 2.5703 |
| 15 | 6 | 517 | 5/4 | 2.4234 |
| 16 | 6 | 517 | 1 | 3.0293 |
| 17 | 6 | 567 | 5/4 | 2.6578 |
| 18 | 6 | 567 | 1 | 3.3223 |
| 19 | 6 | 666 | 1 | 3.9023 |
| 20 | 6 | 666 | 5/4 | 3.1218 |
| 20 | 6 | 719 | 1 | 4.2129 |
| 21 | 6 | 719 | 5/4 | 3.3703 |
| 22 | 6 | 772 | 1 | 4.5234 |
| 23 | 6 | 822 | 1 | 4.8164 |
| 24 | 6 | 873 | 1 | 5.1152 |
| 25 | 8 | 797 | 1 | 6.2266 |
| 26 | 8 | 885 | 1 | 6.9141 |
| 27 | 8 | 948 | 1 | 7.4063 |
| 28 | 2 | reserved | | |
| 29 | 4 | reserved | | |
| 30 | 6 | reserved | | |
| 31 | 8 | reserved | | |

Option 4) "α=4/3" is added to the MCS table in the following manner.

Alt. 1: The target SE and modulation order are not changed, and α and the code rate are combined. Table 7 shows the MCS table for option 4) Alt. 1.

**[Table 7]**

| MCS Index *I_{MCS}* | Modulation Order *Qₘ* | Target code Rate *R* x [1024] | Factor *α* | Spectral efficiency |
|---|---|---|---|---|
| 0 | 2 | 120 | 1 | 0.2344 |
| 1 | 2 | 160 | 4/3 | 0.2344 |
| 2 | 2 | 157 | 1 | 0.3066 |
| 3 | 2 | 209 | 4/3 | 0.3066 |
| 4 | 2 | 193 | 1 | 0.3770 |
| 5 | 2 | 257 | 4/3 | 0.3770 |
| 6 | 2 | 251 | 1 | 0.4902 |
| 7 | 2 | 335 | 4/3 | 0.4902 |
| 8 | 2 | 308 | 1 | 0.6016 |
| 9 | 2 | 411 | 4/3 | 0.6016 |
| 10 | 2 | 379 | 1 | 0.7402 |
| 11 | 2 | 505 | 4/3 | 0.7402 |
| 12 | 2 | 449 | 1 | 0.8770 |
| 13 | 2 | 599 | 4/3 | 0.8770 |
| 14 | 2 | 526 | 1 | 1.0273 |
| 15 | 2 | 701 | 4/3 | 1.0273 |
| 16 | 2 | 602 | 1 | 1.1758 |
| 17 | 2 | 803 | 4/3 | 1.1758 |
| 18 | 2 | 679 | 1 | 1.3262 |
| 19 | 2 | 905 | 4/3 | 1.3262 |
| 20 | 4 | 340 | 1 | 1.3281 |
| 21 | 4 | 453 | 4/3 | 1.3281 |
| 22 | 4 | 378 | 1 | 1.4766 |
| 23 | 4 | 504 | 4/3 | 1.4766 |
| 24 | 4 | 434 | 1 | 1.6953 |
| 25 | 4 | 578 | 4/3 | 1.6953 |
| 26 | 4 | 490 | 1 | 1.9141 |
| 27 | 4 | 653 | 4/3 | 1.9141 |
| 28 | 4 | 553 | 1 | 2.1602 |
| 29 | 4 | 737 | 4/3 | 2.1602 |
| 30 | 4 | 616 | 1 | 2.4063 |
| 31 | 4 | 821 | 4/3 | 2.4063 |
| 32 | 4 | 658 | 1 | 2.5703 |
| 33 | 4 | 877 | 4/3 | 2.5703 |
| 34 | 6 | 438 | 1 | 2.5664 |
| 35 | 6 | 584 | 4/3 | 2.5664 |
| 36 | 6 | 466 | 1 | 2.7305 |
| 37 | 6 | 621 | 4/3 | 2.7305 |
| 38 | 6 | 517 | 1 | 3.0293 |
| 39 | 6 | 689 | 4/3 | 3.0293 |
| 40 | 6 | 567 | 1 | 3.3223 |
| 41 | 6 | 756 | 4/3 | 3.2223 |
| 42 | 6 | 616 | 1 | 3.6094 |
| 43 | 6 | 821 | 4/3 | 3.6094 |
| 44 | 6 | 666 | 1 | 3.9023 |
| 45 | 6 | 888 | 4/3 | 3.9023 |
| 46 | 6 | 719 | 1 | 4.2129 |
| 47 | 6 | 958 | 4/3 | 4.2129 |
| 48 | 6 | 772 | 1 | 4.5234 |
| 49 | 6 | 822 | 1 | 4.8164 |
| 50 | 6 | 873 | 1 | 5.1152 |
| 51 | 6 | 910 | 1 | 5.3320 |
| 52 | 6 | 948 | 1 | 5.5547 |
| 53 | 2 | reserved | | |
| 54 | 4 | reserved | | |
| 55 | 6 | reserved | | |

Alt. 2: The modulation order and code rate in NR may be reused, and α may be added.
Table 8 shows an example of the MCS table for option 4) Alt. 2.

**[Table 8]**

| MCS Index *I_{MCS}* | Modulation Order *Qₘ* | Target code Rate *R* x [1024] | Factor *α* | Spectral efficiency |
|---|---|---|---|---|
| 0 | 2 | 120 | 1 | 0.2344 |
| 1 | 2 | 120 | 4/3 | |
| 2 | 2 | 157 | 1 | 0.3066 |
| 3 | 2 | 157 | 4/3 | |
| 4 | 2 | 193 | 1 | 0.3770 |
| 5 | 2 | 193 | 4/3 | |
| 6 | 2 | 251 | 1 | 0.4902 |
| 7 | 2 | 251 | 4/3 | |
| 8 | 2 | 308 | 1 | 0.6016 |
| 9 | 2 | 308 | 4/3 | |
| 10 | 2 | 379 | 1 | 0.7402 |
| 11 | 2 | 379 | 4/3 | |
| 12 | 2 | 449 | 1 | 0.8770 |
| 13 | 2 | 449 | 4/3 | |
| 14 | 2 | 526 | 1 | 1.0273 |
| 15 | 2 | 526 | 4/3 | |
| 16 | 2 | 602 | 1 | 1.1758 |
| 17 | 2 | 602 | 4/3 | |
| 18 | 2 | 679 | 1 | 1.3262 |
| 19 | 2 | 679 | 4/3 | |
| 20 | 4 | 340 | 1 | 1.3281 |
| 21 | 4 | 340 | 4/3 | |
| 22 | 4 | 378 | 1 | 1.4766 |
| 23 | 4 | 378 | 4/3 | |
| 24 | 4 | 438 | 1 | 1.6953 |
| 25 | 4 | 438 | 4/3 | |
| 26 | 4 | 490 | 1 | 1.9141 |
| 27 | 4 | 490 | 4/3 | |
| 28 | 4 | 553 | 1 | 2.1602 |
| 29 | 4 | 553 | 4/3 | |
| 30 | 4 | 616 | 1 | 2.4063 |
| 31 | 4 | 616 | 4/3 | |
| 32 | 4 | 658 | 1 | 2.5703 |
| 33 | 4 | 658 | 4/3 | |
| 34 | 6 | 438 | 1 | 2.5664 |
| 35 | 6 | 438 | 4/3 | |
| 36 | 6 | 466 | 1 | 2.7305 |
| 37 | 6 | 466 | 4/3 | |
| 38 | 6 | 517 | 1 | 3.0293 |
| 39 | 6 | 517 | 4/3 | |
| 40 | 6 | 567 | 1 | 3.3223 |
| 41 | 6 | 567 | 4/3 | |
| 42 | 6 | 616 | 1 | 3.6094 |
| 43 | 6 | 616 | 4/3 | |
| 44 | 6 | 666 | 1 | 3.9023 |
| 45 | 6 | 666 | 4/3 | |
| 46 | 6 | 719 | 1 | 4.2129 |
| 47 | 6 | 719 | 4/3 | |
| 48 | 6 | 772 | 1 | 4.5234 |
| 49 | | | 4/3 | |
| 50 | 6 | 822 | 1 | 4.8164 |
| 51 | | | 4/3 | |
| 52 | 6 | 873 | 1 | 5.1152 |
| 53 | | | 4/3 | |
| 54 | 6 | 910 | 1 | 5.3320 |
| 55 | | | 4/3 | |
| 56 | 6 | 948 | 1 | 5.5547 |
| 57 | | | 4/3 | |
| 58 | 2 | reserved | | |
| 59 | 4 | reserved | | |
| 60 | 6 | reserved | | |

Operation 2-2-2) New tables or signaling may be defined for the time domain FTN compression or spectrum extension factor α.

Operation 2-2-2-1) New tables and signaling may be defined for α associated with the modulation order.

Option 1) New tables may be defined for both α>1 and α<1. A new field "FactorAlpha scaling" may be added to RRC signaling, MAC-CE or DCI in order to indicate α. The default value of α may be 1. Table 9 shows an example table for option 1). It is to be noted that α=4/3 may always be configured in the table.

**[Table 9]**

| New Table for factor alpha for BPSK, QPSK | |
|---|---|
| *FactorAlpha scaling* field | *α* |
| 000 | 3/4 |
| 001 | 4/5 |
| 010 | 17/20 |
| 011 | 9/10 |
| 100 | 6/5 |
| 101 | 5/4 |
| 110 | 3/2 |
| 111 | 2 |

| New Table for factor alpha for 16QAM, 64QAM, 256QAM | |
|---|---|
| *FactorAlpha scaling field* | *α* |
| 00 | 6/5 |
| 01 | 5/4 |
| 10 | 3/2 |
| 11 | 2 |

Option 2) New tables for both α>1 and α<1 may be defined. New fields "FactorAlpha scaling1" and "FactorAlpha scaling2" may be added to RRC signaling, MAC-CE or DCI in order to indicate α. The default value of α may be 1. Table 10 shows an example of the table for option 1). It is to be noted that α=4/3 may always be configured in the table.

Operation 2-2-2-2) New tables and signaling may be defined for the time domain FTN compression or spectrum extension factor α.

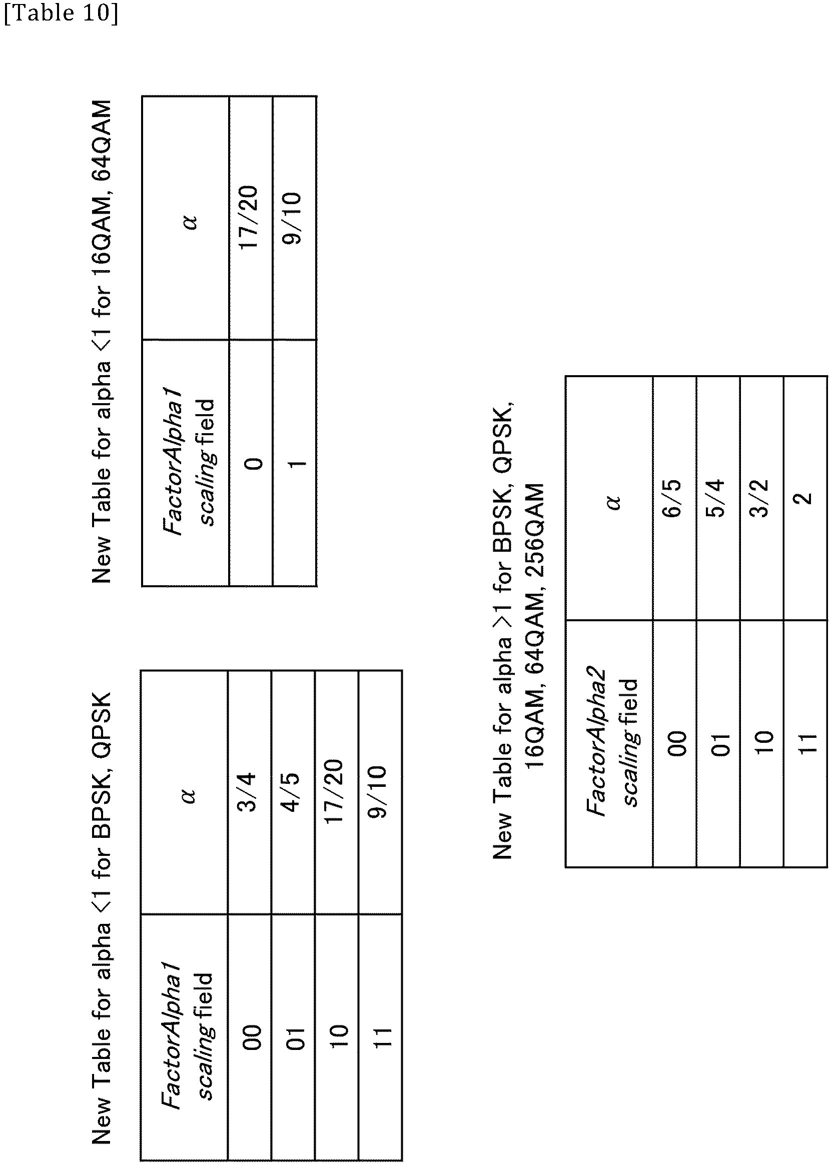

Option 1) New signaling "FactorAlpha" may be added to RRC signaling, MAC-CE or DCI. It is to be noted that a specific value (e.g., α=4/3) may always be supported by the signaling. In a case where "FactorAlpha" is not configured, the default value of α may be 1.

Operation 2-2-2-3) The MCS index table may be updated.

Option 1) The NR MCS index table may be applied for both a case of α>1 and a case of α<1.

Option 2) The NR MCS index table may be applied for a case of α>1, and a new MCS index table may be added for a case of α<1. The new MCS index table for α<1 may be as follows.

Option 2-1) The size of the NR MCS index table may be reduced, and the index of higher order modulation may be deleted. Table 11 shows an example of such an MCS index table.

**[Table 11]**

| MCS Index I_{MCS} | Modulation Order Qₘ | Target code Rate R x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 2 | reserved | |
| 12 | 4 | reserved | |
| 13 | 6 | reserved | |

Option 2-2) The size of the NR MCS index table may be reduced, and the contents may be changed. Table 12 shows an example of such an MCS index table.

**[Table 12]**

| MCS Index I_{MCS} | Modulation Order Qₘ | Target code Rate R x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 2 | reserved | |
| 23 | 4 | reserved | |
| 24 | 6 | reserved | |
| 25 | 8 | reserved | |

Option 2-3) The size of the NR MCS index table may be maintained, and the index of low order modulation may be increased and the index of high order modulation may be decreased. Table 13 shows an example of such an MCS index table.

**[Table 13]**

| MCS Index I_{MCS} | Modulation Order Qₘ | Target code Rate R x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 360 | 0.7031 |
| 4 | 2 | 449 | 0.8770 |
| 5 | 2 | 525 | 1.0254 |
| 6 | 2 | 602 | 1.1758 |
| 7 | 4 | 204 | 0.7969 |
| 8 | 4 | 330 | 1.2890 |
| 9 | 4 | 378 | 1.4766 |
| 10 | 4 | 434 | 1.6953 |
| 11 | 4 | 490 | 1.9141 |
| 12 | 4 | 553 | 2.1602 |
| 13 | 4 | 616 | 2.4063 |
| 14 | 4 | 658 | 2.5703 |
| 15 | 6 | 265 | 1.5527 |
| 16 | 6 | 390 | 2.2852 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 25 | 6 | 772 | 4.5234 |
| 26 | 8 | 682.5 | 5.3320 |
| 27 | 8 | 754 | 5.8906 |
| 28 | 2 | reserved | |
| 29 | 4 | reserved | |
| 30 | 6 | reserved | |
| 31 | 8 | reserved | |

Option 3) The NR MCS index table may be applied for a case of α<1 and a new MCS index table may be added for a case of α>1. The new MCS index table for α>1 may be as follows.

Option 3-1) The size of the NR MCS index table of NR may be reduced and low code rate indexes may be deleted. Table 14 shows an example of such an MCS index table.

**[Table 14]**

| MCS Index I_{MCS} | Modulation Order Qₘ | Target code Rate R x [1024] | Spectral efficiency |
|---|---|---|---|
| 0 | 2 | 251 | 0.4902 |
| 1 | 2 | 308 | 0.6016 |
| 2 | 2 | 379 | 0.7402 |
| 3 | 2 | 449 | 0.8770 |
| 4 | 2 | 526 | 1.0273 |
| 5 | 2 | 602 | 1.1758 |
| 6 | 2 | 679 | 1.3262 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 4 | 378 | 1.4766 |
| 12 | 4 | 434 | 1.6953 |
| 13 | 6 | 517 | 3.0293 |
| 14 | 6 | 567 | 3.3223 |
| 15 | 6 | 616 | 3.6094 |
| 16 | 6 | 666 | 3.9023 |
| 17 | 6 | 719 | 4.2129 |
| 18 | 6 | 772 | 4.5234 |
| 19 | 6 | 822 | 4.8164 |
| 20 | 6 | 873 | 5.1152 |
| 21 | 6 | 910 | 5.3320 |
| 22 | 6 | 948 | 5.5547 |
| 23 | 2 | reserved | |
| 24 | 4 | reserved | |
| 25 | 6 | reserved | |

Option 3-2) The size of the NR MCS index table of NR may be reduced and contents may be changed. Table 15 shows an example of such an MCS index table.

**[Table 15]**

| MCS Index I_{MCS} | Modulation Order Qₘ | Target code Rate R x [1024] | Spectral efficiency |
|---|---|---|---|
| 0 | 2 | 180 | 0.3516 |
| 1 | 2 | 220 | 0.4297 |
| 2 | 2 | 251 | 0.4902 |
| 3 | 2 | 380 | 0.7422 |
| 4 | 2 | 470 | 0.9180 |
| 5 | 2 | 526 | 1.0273 |
| 6 | 2 | 602 | 1.1758 |
| 7 | 2 | 679 | 1.3262 |
| 8 | 4 | 434 | 1.6953 |
| 9 | 4 | 490 | 1.9141 |
| 10 | 4 | 553 | 2.1602 |
| 11 | 4 | 616 | 2.4063 |
| 12 | 4 | 658 | 2.5703 |
| 13 | 6 | 517 | 3.0293 |
| 14 | 6 | 567 | 3.3223 |
| 15 | 6 | 616 | 3.6094 |
| 16 | 6 | 666 | 3.9023 |
| 17 | 6 | 719 | 4.2129 |
| 18 | 6 | 772 | 4.5234 |
| 19 | 6 | 822 | 4.8164 |
| 20 | 6 | 873 | 5.1152 |
| 21 | 6 | 910 | 5.3320 |
| 22 | 6 | 948 | 5.5547 |
| 23 | 2 | reserved | |
| 24 | 4 | reserved | |
| 25 | 6 | reserved | |

Option 3-3) The size of the NR MCS index table may be maintained and the indexes of the low code rate may be decreased and the indexes of the high code rate may be increased. Table 16 shows an example of such an MCS index table.

**[Table 16]**

| MCS Index I_{MCS} | Modulation Order Qₘ | Target code Rate R x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 490 | 0.9570 |
| 5 | 2 | 526 | 1.0273 |
| 6 | 2 | 560 | 1.0938 |
| 7 | 2 | 602 | 1.1758 |
| 8 | 2 | 635 | 1.2402 |
| 9 | 2 | 679 | 1.3262 |
| 10 | 4 | 340 | 1.3281 |
| 11 | 4 | 434 | 1.6953 |
| 12 | 4 | 490 | 1.9141 |
| 13 | 4 | 553 | 2.1602 |
| 14 | 4 | 580 | 2.2656 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

Option 4) The updated NR MCS index table may be applied for both a case of α<1 and a case of α>1.

Option 4-1) The size of the NR MCS index table may be maintained, and the indexes of the low order modulation and high code rate may be increased, and the indexes of the high order modulation and low code rate may be decreased. Table 17 shows an example of such an MCS index table.

**[Table 17]**

| MCS Index I_{MCS} | Modulation Order Qₘ | Target code Rate R x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 490 | 0.9570 |
| 5 | 2 | 526 | 1.0273 |
| 6 | 2 | 560 | 1.0938 |
| 7 | 2 | 602 | 1.1758 |
| 8 | 2 | 635 | 1.2402 |
| 9 | 2 | 679 | 1.3262 |
| 10 | 4 | 340 | 1.3281 |
| 11 | 4 | 434 | 1.6953 |
| 12 | 4 | 490 | 1.9141 |
| 13 | 4 | 553 | 2.1602 |
| 14 | 4 | 580 | 2.2656 |
| 15 | 4 | 616 | 2.4063 |
| 16 | 4 | 658 | 2.5703 |
| 17 | 6 | 517 | 3.0293 |
| 18 | 6 | 567 | 3.3223 |
| 19 | 6 | 616 | 3.6094 |
| 20 | 6 | 666 | 3.9023 |
| 21 | 6 | 719 | 4.2129 |
| 22 | 6 | 772 | 4.5234 |
| 23 | 6 | 800 | 4.6875 |
| 24 | 6 | 822 | 4.8164 |
| 25 | 6 | 850 | 4.9805 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

Option 4-2) The size of the NR MCS index table may be reduced and the contents may be changed. Table 18 shows an example of such an MCS index table.

**[Table 18]**

| MCS Index I_{MCS} | Modulation Order Qₘ | Target code Rate R x [1024] | Spectral efficiency |
|---|---|---|---|
| 0 | 2 | 120 | 0.2344 |
| 1 | 2 | 308 | 0.6016 |
| 2 | 2 | 490 | 0.9570 |
| 3 | 2 | 526 | 1.0273 |
| 4 | 2 | 560 | 1.0938 |
| 5 | 2 | 602 | 1.1758 |
| 6 | 2 | 635 | 1.2402 |
| 7 | 2 | 679 | 1.3262 |
| 8 | 4 | 378 | 1.4766 |
| 9 | 4 | 490 | 1.9141 |
| 10 | 4 | 553 | 2.1602 |
| 11 | 4 | 616 | 2.4063 |
| 12 | 4 | 658 | 2.5703 |
| 13 | 6 | 438 | 2.5664 |
| 14 | 6 | 466 | 2.7305 |
| 15 | 6 | 517 | 3.0293 |
| 16 | 6 | 567 | 3.3223 |
| 17 | 6 | 616 | 3.6094 |
| 18 | 6 | 666 | 3.9023 |
| 19 | 6 | 719 | 4.2129 |
| 20 | 6 | 772 | 4.5234 |
| 21 | 6 | 822 | 4.8164 |
| 22 | 6 | 873 | 5.1152 |
| 23 | 6 | 910 | 5.3320 |
| 24 | 6 | 948 | 5.5547 |
| 25 | 2 | reserved | |
| 26 | 4 | reserved | |
| 27 | 6 | reserved | |

Operation 3) The following UE capabilities may be defined on a per UE basis, a per FR basis, a per FC basis, etc., and may be reported from the UE to the base station 10.

Operation 3-1) The UE capability related to asymmetric transform precoding applied transmission may be defined.

Option 1) As a UE transmission capability, L-S transform precoding (α<1) and S-L transform precoding (α>1) may be supported as mandatory without requiring capability reporting.

Option 2) As a UE transmission capability, L-S transform precoding (α<1) and S-L transform precoding (α>1) may be supported as mandatory with requirement of capability reporting.

Option 3-1) As a UE transmission capability, L-S transform precoding (α<1) may be supported as mandatory without requiring capability reporting and S-L transform precoding (α>1) may be supported as mandatory with requirement of capability reporting.

Option 3-2) As a UE transmission capability, L-S transform precoding (α<1) may be supported as mandatory with requirement of capability reporting and S-L transform precoding (α>1) may be supported as mandatory without requiring capability reporting.

In the above-described option 2) or 3), one or two UE transmission capabilities for L-S and S-L transform precoding may be defined and may be reported.

Operation 3-2) The UE capability related to asymmetric transform precoding applied reception may be defined.

Option 1) As a UE reception capability, L-S transform precoding (α<1) and S-L transform precoding (α>1) may be supported as mandatory without requiring capability reporting.

Option 2) As a UE reception capability, L-S transform precoding (α<1) and S-L transform precoding (α>1) may be supported as mandatory with requirement of capability reporting.

Option 3-1) As a UE reception capability, L-S transform precoding (α<1) may be supported as mandatory without requiring capability reporting and S-L transform precoding (α>1) may be supported as mandatory with requirement of capability reporting.

Option 3-2) As a UE reception capability, L-S transform precoding (α<1) may be supported as mandatory with requirement of capability reporting and S-L transform precoding (α>1) may be supported as mandatory without requiring capability reporting.

In the above-described option 2) or 3), one or two UE reception capabilities for L-S and S-L transform precoding may be defined and may be reported.

Operation 3-3) The UE capability indicating whether or not a new TBS calculation method is supported may be defined.

Operation 3-4) The UE capability indicating whether or not a new MCS table and/or a new α table are/is supported may be defined.

The above-described UE capabilities may be the same or may be different for different frequency bands. The UE may report the above-described UE capabilities for different frequency bands together or separately.

According to the above-described embodiments, a transmitter can be implemented in which increase of complexity is avoided while DFT-s-OFDM performance is improved.

In other words, increase of complexity of the transmitter can be avoided in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

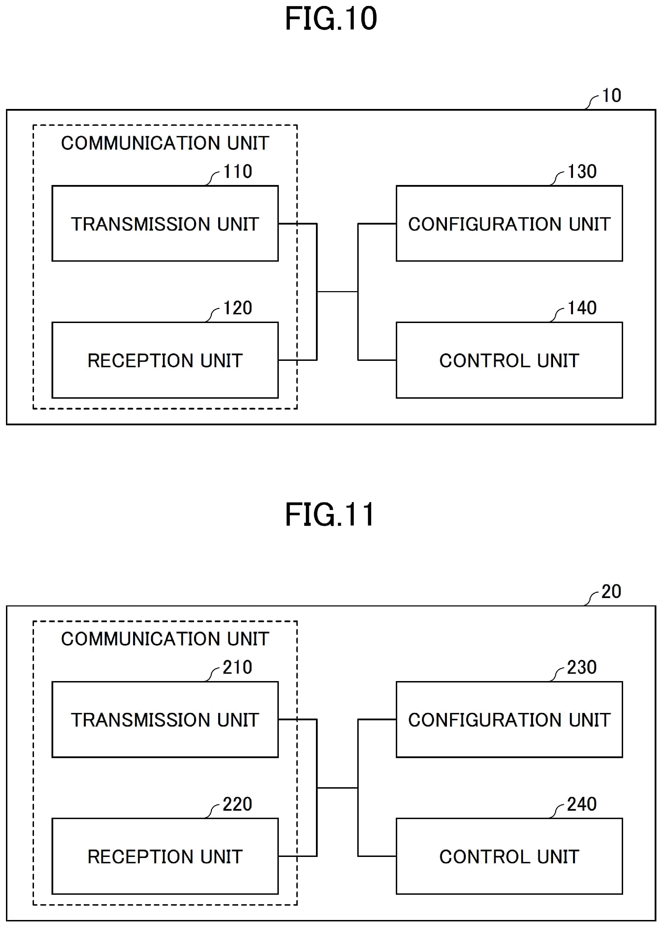

Fig. 10 is a drawing illustrating an example of a functional structure of a base station 10 according to an embodiment of the present invention. As shown in Fig. 10, the base station 10 includes a transmission unit 110, a reception unit 120, a configuration unit 130, and a control unit 140. The functional configuration illustrated in Fig. 10 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the configuration of waveforms and transmission methods.

The control unit 140 performs control related to the configuration of waveforms and transmission methods as described in an embodiment of the present invention. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

Fig. 11 is a drawing illustrating an example of a functional structure of a terminal 20 according to an embodiment of the present invention. As shown in Fig. 11, the terminal 20 includes a transmission unit 210, a reception unit 220, a configuration unit 230, and a control unit 240. The functional configuration illustrated in Fig. 11 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the configuration of waveforms and transmission methods.

The control unit 240 performs control related to the configuration of waveforms and transmission methods as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 10 and Fig. 11) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

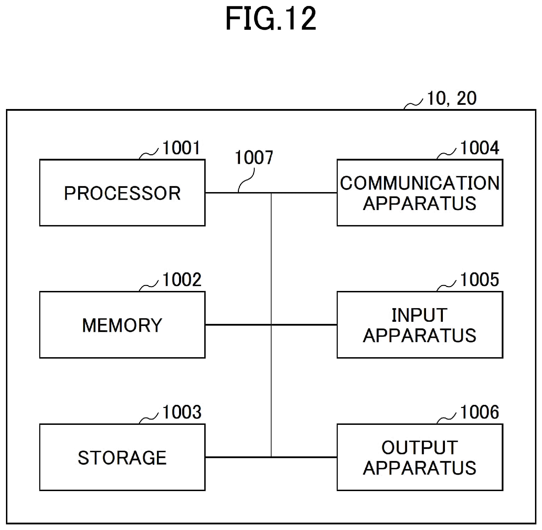

For example, the base station 10, the terminal 20, etc., according to an embodiment of the present disclosure may function as a computer for processing the radio communication method of the present disclosure. Fig. 12 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 10 may be implemented by control programs that are stored in the memory 1002 and that operate on the processor 1001. In addition, for example, the control unit 240 of the terminal 20 illustrated in Fig. 11 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

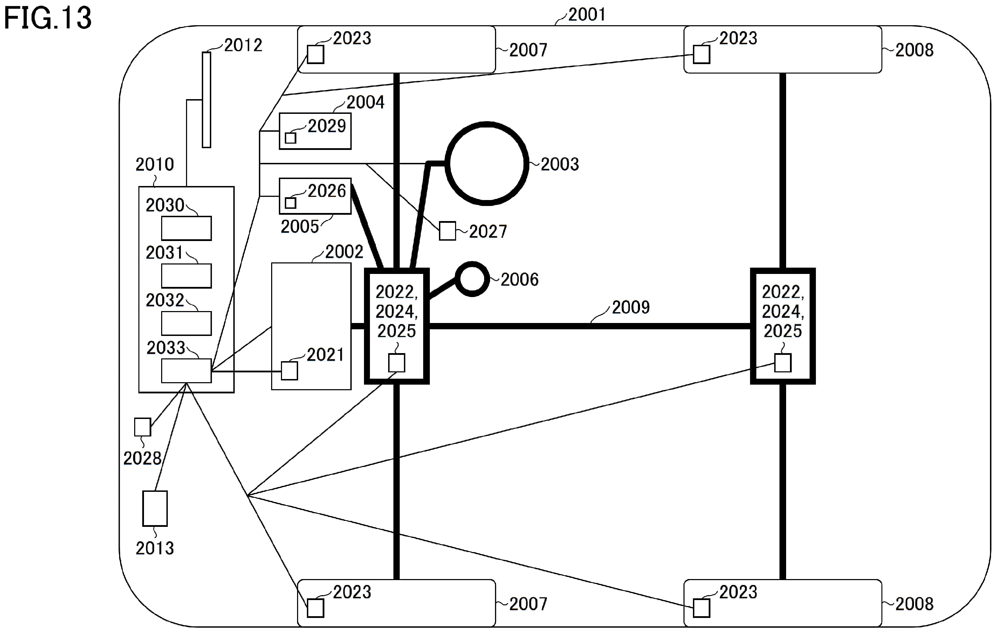

Fig. 13 shows an example of a configuration of a vehicle 2001. As shown in Fig. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a control unit configured to generate a DFT-s-OFDM (Discrete Fourier transform - spread - Orthogonal Frequency Division Multiplexing) signal by performing asymmetric transform precoding between layer mapping and antenna port mapping; and a transmission unit configured to transmit the DFT-s-OFDM signal. The control unit calculates a transport block size based on a parameter related to the asymmetric transform precoding.

According to the above-described configuration, a transmitter can be implemented in which increase of complexity is avoided while DFT-s-OFDM performance is improved. Increase of complexity of the transmitter can be avoided in the wireless communication system.

The parameter may be a value having a number of inputs of the asymmetric transform precoding as a numerator and a number of outputs as a denominator. According to the above-described configuration, a transmitter can be implemented in which increase of complexity is avoided while DFT-s-OFDM performance is improved.

The control unit may calculate a number of information bits related to the transport block based on the parameter. According to the above-described configuration, a transmitter can be implemented in which increase of complexity is avoided while DFT-s-OFDM performance is improved.

The control unit may calculate a number of REs (Resource elements) related to the transport block based on the parameter. According to the above-described configuration, a transmitter can be implemented in which increase of complexity is avoided while DFT-s-OFDM performance is improved.

The control unit may perform PT-RS insertion in a time domain or in a frequency domain. According to the above-described configuration, a transmitter can be implemented in which increase of complexity is avoided while DFT-s-OFDM performance is improved.

In addition, according to an embodiment of the present invention, a communication method performed by a terminal is provided. The communication method includes: generating a DFT-s-OFDM (Discrete Fourier transform - spread - Orthogonal Frequency Division Multiplexing) signal by performing asymmetric transform precoding between layer mapping and antenna port mapping; transmitting the DFT-s-OFDM signal; and calculating a transport block size based on a parameter related to the asymmetric transform precoding.

According to the above-described configuration, a transmitter can be implemented in which increase of complexity is avoided while DFT-s-OFDM performance is improved. Increase of complexity of the transmitter can be avoided in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed. The CP overhead can be flexibly changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus

## Claims

1. A terminal comprising:
a control unit configured to generate a DFT-s-OFDM (Discrete Fourier transform - spread - Orthogonal Frequency Division Multiplexing) signal by performing asymmetric transform precoding between layer mapping and antenna port mapping; and
a transmission unit configured to transmit the DFT-s-OFDM signal, wherein
the control unit calculates a transport block size based on a parameter related to the asymmetric transform precoding.

2. The terminal as claimed in claim 1, wherein
the parameter is a value having a number of inputs of the asymmetric transform precoding as a numerator and a number of outputs as a denominator.

3. The terminal as claimed in claim 1, wherein
the control unit calculates a number of information bits related to the transport block based on the parameter.

4. The terminal as claimed in claim 1, wherein
the control unit calculates a number of REs (Resource elements) related to the transport block based on the parameter.

5. The terminal as claimed in claim 1, wherein
the control unit performs PT-RS insertion in a time domain or in a frequency domain.

6. A communication method performed by a terminal, the communication method comprising:
generating a DFT-s-OFDM (Discrete Fourier transform - spread - Orthogonal Frequency Division Multiplexing) signal by performing asymmetric transform precoding between layer mapping and antenna port mapping;
transmitting the DFT-s-OFDM signal; and
calculating a transport block size based on a parameter related to the asymmetric transform precoding.
